(19) **Europäisches Patentamt / European Patent Office / Office européen des brevets**

(11) **EP 4 307 220 A1**

(12) **EUROPEAN PATENT APPLICATION**
published in accordance with Art. 153(4) EPC

(43) Date of publication:
**17.01.2024 Bulletin 2024/03**

(21) Application number: **22778821.3**

(22) Date of filing: **26.03.2022**

(51) International Patent Classification (IPC):
**G06T 7/00** $^{(2017.01)}$

(52) Cooperative Patent Classification (CPC):
**G06T 7/00; G06T 7/593; G06T 7/70; G06V 40/10**

(86) International application number:
**PCT/CN2022/083227**

(87) International publication number:
**WO 2022/206639 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 CN 202110351266**

(71) Applicant: **Huawei Technologies Co., Ltd.**
**Longgang**
**Shenzhen, Guangdong 518129 (CN)**

(72) Inventors:
• **ZHAO, Jie**
**Shenzhen, Guangdong 518129 (CN)**
• **MA, Chunhui**
**Shenzhen, Guangdong 518129 (CN)**
• **HUANG, Lei**
**Shenzhen, Guangdong 518129 (CN)**
• **LIU, Xiaomeng**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **METHOD FOR DETECTING HUMAN BODY KEY POINT AND RELATED APPARATUS**

(57) This application provides a human body key point detection method and a related apparatus. The method may be applied to an electronic device provided with one or more cameras. The electronic device may identify 3D key points of a user in an image collected by the camera. The electronic device may detect, based on the 3D key points, whether a user posture matches a preset posture. By using a group of 3D key points determined when the user posture matches the preset posture, the electronic device may calculate an included angle between an image plane and a human body model that is determined by using the group of 3D key points. The electronic device may correct location information of the 3D key points by using the included angle. The method can reduce costs, reduce an error caused by image perspective deformation to location information of 3D key points, and improve accuracy of detecting the location information of the 3D key points.

FIG. 3

## Description

This application claims priority to Chinese Patent Application No. 202110351266.0, filed with the China National Intellectual Property Administration on March 31, 2021 and entitled "HUMAN BODY KEYPOINT DETECTION METHOD AND RELATED APPARATUS", which is incorporated herein by reference in its entirety.

## TECHNICAL FIELD

This application relates to the field of terminal technologies, and in particular, to a human body key point detection method and a related apparatus.

## BACKGROUND

Human body key point detection is a basis of many computer vision tasks. By detecting human body three-dimensional (three-dimensional, 3D) key points, posture detection, action classification, smart fitness, somatic games, and the like may be implemented.

An electronic device may collect an image by using a camera, and identify human body two-dimensional (two-dimensional, 2D) key points in the image. The electronic device may estimate human body 3D key points based on the 2D key points by using a deep learning technology or the like. In the foregoing method for estimating the 3D key points by using the 2D key points, due to factors such as a height difference of a user and a distance difference between the user and the camera, images collected by the camera have perspective deformation of different degrees. The image perspective deformation may cause errors in the detected 2D key points. In this case, the 3D key points estimated by using the foregoing 2D key points also have errors.

Currently, the electronic device may detect, by using a plurality of cameras, a location of the user from the camera to determine a degree of person perspective deformation in an image. Further, the electronic device may correct the 3D key points based on the degree of person perspective deformation in the image. However, in the foregoing method, a plurality of cameras are required, and placement locations of the plurality of cameras need to be designed to improve detection precision, resulting in high costs and high calculation complexity of determining 3D key points.

## SUMMARY

This application provides a human body key point detection method and a related apparatus. The method may be applied to an electronic device provided with one or more cameras. The electronic device may identify 3D key points of a user in an image collected by the camera. The electronic device may detect, based on the 3D key points, whether a user posture matches a preset posture. By using a group of 3D key points determined when the user posture matches the preset posture, the electronic device may calculate an included angle between an image plane and a human body model that is determined by using the group of 3D key points. The electronic device may correct location information of the 3D key points by using the included angle. The method can reduce costs, reduce an error caused by image perspective deformation to location information of 3D key points, and improve accuracy of detecting the location information of the 3D key points.

According to a first aspect, this application provides a human body key point detection method. The method may be applied to an electronic device including one or more cameras. In the method, the electronic device may obtain a first image of a first user by using the camera; the electronic device may determine a first group of 3D key points of the first user based on the first image; the electronic device may determine whether a plurality of 3D key points in the first group of 3D key points meet a first condition; if the first condition is met, the electronic device may determine a first compensation angle based on the plurality of 3D key points; and the electronic device performs rotation correction on the first group of 3D key points by using the first compensation angle.

With reference to the first aspect, in some embodiments, if the first condition is not met, the electronic device may perform rotation correction on the first group of 3D key points by using a second compensation angle, where the second compensation angle is determined based on a second group of 3D key points, and the second group of 3D key points is a latest group of 3D key points that meet the first condition before the first image is obtained.

With reference to the first aspect, in some embodiments, that the electronic device obtains a first image of a first user by using the camera may be: The electronic device may determine a first moment based on first multimedia information, where the first moment is a moment at which the first multimedia information indicates a user to perform an action that meets the first condition; and the electronic device may obtain, by using the camera, the first image of the first user in a first time period starting from the first moment.

The first time period may be a time period in which the first multimedia information indicates the user to perform an action that meets the first condition. For example, a time required to complete the action that meets the first condition is 1 second. In this case, the first time period is 1 second starting from the first moment. Optionally, the first time period may be a time period of a fixed time length.

With reference to the first aspect, in some embodiments, if 3D key points corresponding to an action that the multimedia information indicates the user to perform at a second moment do not meet the first condition, the electronic device may perform, by using a third compensation angle, rotation correction on 3D key points determined based on an image collected in a second time period starting from the second moment, where the third compensation angle is determined based on a third group of 3D key points, and the third group of 3D key points is a latest group of 3D key points that meet the first condition before the second moment.

The second time period may be a time period in which the first multimedia information indicates the user to perform an action that does not meet the first condition. For example, a time required to complete the action that meets the first condition is 1 second. In this case, the second time period is 1 second starting from the second moment. Optionally, the second time period may be a time period of a fixed time length.

With reference to the first aspect, in some embodiments, that the electronic device determines whether a plurality of 3D key points in the first group of 3D key points meet a first condition may be: The electronic device may determine whether the plurality of 3D key points in the first group of 3D key points match 3D key points corresponding to a first action, where the first action is at least one of an upper body upright action and a leg upright action.

If the first action is the upper body upright action, the first compensation angle is an included angle between an image plane and a straight line on which a neck point and a chest abdomen point in the first group of 3D key points are located.

If the first action is the leg upright action, the first compensation angle is an included angle between an image plane and a straight line on which any two of a hip point, a knee point, and an ankle point in the first group of 3D key points are located.

With reference to the first aspect, in some embodiments, the plurality of 3D key points in the first group of 3D key points include a hip point, a knee point, and an ankle point. That the electronic device determines whether a plurality of 3D key points in the first group of 3D key points meet a first condition may be: The electronic device may calculate a first included angle between a straight line on which a left hip point and a left knee point in the first group of 3D key points are located and a straight line on which the left knee point and a left foot point in the first group of 3D key points are located, and a second included angle between a straight line on which a right hip point and a right knee point in the first group of 3D key points are located and a straight line on which the right knee point and a right foot point in the first group of 3D key points are located. The electronic device may determine, by detecting whether a difference between the first included angle and 180° is less than a first difference and whether a difference between the second included angle and 180° is less than the first difference, whether the plurality of 3D key points in the first group of 3D key points meet the first condition.

A case in which the plurality of 3D key points in the first group of 3D key points meet the first condition includes: the difference between the first included angle and 180° is less than the first difference and/or the difference between the second included angle and 180° is less than the first difference.

It can be learned from the foregoing method that, when detecting that 3D key points of the user meet the first condition, the electronic device may determine a degree of person perspective deformation in an image by using 3D key points determined based on the image. If the 3D key points of the user meet the first condition, the electronic device may detect that the user performs an upper body upright action and/or a leg upright action. In other words, when the user is in an upper body upright posture and/or a leg upright posture, the electronic device may determine the degree of person perspective deformation in the image by using the 3D key points determined based on the image. Further, the electronic device may correct location information of the 3D key points determined based on the image. This reduces an error caused by image perspective deformation to the location information of the 3D key points, and improves accuracy of detecting the location information of the 3D key points. In this method, only one camera is required, which not only reduces costs, but also reduces calculation complexity of key point detection.

In addition, each time the electronic device detects that the 3D key points of the user meet the first condition, if an included angle between the image plane and a straight line on which upper body 3D key points and/or leg 3D key points are located may be used to correct the location information of the 3D key points, the electronic device may update a compensation angle. An updated compensation angle can more accurately reflect a degree of person perspective deformation in the image collected by the camera at a current location of the user. This can reduce impact of a change of a location between the user and the camera on correction of location information of 3D key points, and improve accuracy of corrected location information of the 3D key points. In other words, the electronic device may correct the location information of the 3D key points by using the updated compensation angle. A human body model determined based on the corrected 3D key points can more accurately reflect a user posture, thereby improving accuracy of posture detection. In this way, during fitness or somatic gaming, the electronic device can more accurately determine whether a user posture is correct, whether a user action amplitude meets a requirement, and the like, so that better user experience is implemented during fitness or somatic gaming.

With reference to the first aspect, in some embodiments, the second compensation angle is an included angle between the image plane and a straight line on which upper body 3D key points and/or leg 3D key points in the second group of 3D key points are located; and the third compensation angle is an included angle between the image plane and a straight line on which upper body 3D key points and/or leg 3D key points in the third group of 3D key points are located.

With reference to the first aspect, in some embodiments, the second compensation angle is a sum of a first compensation angle variation and a third included angle; the third included angle is an included angle between the image plane and a straight line on which upper body 3D key points and/or leg 3D key points in the second group of 3D key points are located; the first compensation angle variation is determined based on a first height H1, a first distance Y1, a second height H2, and a second distance Y2, where Y1 and H1 are respectively a distance between the first user and the camera and a height of the first user that exist when the first image is collected, and Y2 and H2 are respectively a distance between the first user and the camera and a height of the first user that exist when a second image is collected; and key points of the first user in the first image are the first group of 3D key points, and key points of the first user in the second image are the second group of 3D key points. In a time period from a moment of collecting the second image to a moment of collecting the first image, a smaller height of the first user indicates that the second compensation angle increases more than the third angle, a smaller distance between the first user and the camera indicates that the second compensation angle increases more than the third angle, and a smaller value of H1 indicates that the second compensation angle increases more than the third angle.

The third compensation angle is a sum of a second compensation angle variation and a fourth included angle; the fourth included angle is an included angle between the image plane and a straight line on which upper body 3D key points and/or leg 3D key points in the third group of 3D key points are located; the second compensation angle variation is determined based on a third height H3, a third distance Y3, a fourth height H4, and a fourth distance Y4, where Y3 and H3 are respectively a distance between the first user and the camera and a height of the first user in the second time period, and Y4 and H4 are respectively a distance between the first user and the camera and a height of the first user that exist when a third image is collected; and key points of the first user in the third image are the third group of 3D key points. In a time period from the moment of collecting the second image to the second time period, a smaller height of the first user indicates that the third compensation angle increases more than the fourth angle, a smaller distance between the first user and the camera indicates that the third compensation angle increases more than the fourth angle, and a smaller value of H3 indicates that the third compensation angle increases more than the fourth angle.

Both the first compensation angle variation and the second compensation angle variation are determined by using a first model; the first model is obtained by training a plurality of groups of training samples; one group of training samples includes: a variation of a lower edge of a location of a human body in an image between an image whose collection time is earlier and an image whose collection time is later, a variation of a height of the human body in the image, a height of the human body in the image whose collection time is later, and a variation of an included angle between the image plane and a straight line on which upper body 3D key points and/or leg 3D key points in two groups of 3D key points determined based on the image whose collection time is earlier and the image whose collection time is later are located; and a plurality of 3D key points in the two groups of 3D key points all meet the first condition.

It can be learned from the foregoing method that, even if the 3D key points of the user do not meet the first condition, the electronic device may also determine a degree of person perspective deformation in the image in real time, and correct the location information of the 3D key points. This improves accuracy of 3D key point detection.

With reference to the first aspect, in some embodiments, if the electronic device determines that an included angle between the image plane and a straight line on which upper body 3D key points and/or leg 3D key points in the first group of 3D key points are located is less than a fifth included angle, the electronic device may determine the first compensation angle based on the plurality of 3D key points. If the electronic device determines that the included angle between the image plane and the straight line on which the upper body 3D key points and/or the leg 3D key points in the first group of 3D key points are located is greater than the fifth included angle, the electronic device may perform rotation correction on the first group of 3D key points by using the second compensation angle.

The fifth included angle may be set based on an empirical value. This is not limited in this embodiment of this application.

It can be learned from the foregoing method that the electronic device may determine, by setting the fifth included angle, whether the calculated included angle can be used as a compensation angle for correcting the location information of the 3D key points. This avoids a case in which the compensation angle is an impossible value because of an error in calculating the included angle, and improves accuracy of 3D key point detection.

The third compensation angle is a sum of a second compensation angle variation and a fourth included angle; the fourth included angle is an included angle between the image plane and a straight line on which upper body 3D key points and/or leg 3D key points in the third group of 3D key points are located; the second compensation angle variation is determined based on a third height H3, a third distance Y3, a fourth height H4, and a fourth distance Y4, where Y3 and H3 are respectively a distance between the first user and the camera and a height of the first user in the second time period, and Y4 and H4 are respectively a distance between the first user and the camera and a height of the first user that exist when a third image is collected; and key points of the first user in the third image are the third group of 3D key points.

In a time period from the moment of collecting the second image to the second time period, a smaller height of the first user indicates that the third compensation angle increases more than the fourth angle, a smaller distance between the first user and the camera indicates that the third compensation angle increases more than the fourth angle, and a smaller value of H3 indicates that the third compensation angle increases more than the fourth angle.

The electronic device determines that an included angle between the image plane and a straight line on which upper body 3D key points and/or leg 3D key points in the first group of 3D key points are located is less than a fifth included angle.

If the included angle between the image plane and the straight line on which the upper body 3D key points and/or the leg 3D key points in the first group of 3D key points are located is greater than the fifth included angle, the electronic device performs rotation correction on the first group of 3D key points by using the second compensation angle.

According to a second aspect, this application provides an electronic device. The electronic device includes a camera, a display, a memory, and a processor. The camera may be configured to collect an image, the memory may be configured to store a computer program, and the processor may be configured to invoke the computer program, so that the electronic device performs any one of the possible implementation of the first aspect.

According to a third aspect, this application provides a computer storage medium, including instructions. When the instructions are run on an electronic device, the electronic device is enabled to perform any one of the possible implementations of the first aspect.

According to a fourth aspect, an embodiment of this application provides a chip. The chip is applied to an electronic device, the chip includes one or more processors, and the processor is configured to invoke computer instructions, so that the electronic device performs any one of the possible implementations of the first aspect.

According to a fifth aspect, an embodiment of this application provides a computer program product including instructions. When the computer program product runs on a device, the electronic device is enabled to perform any one of the possible implementations of the first aspect.

It may be understood that the electronic device provided in the second aspect, the computer storage medium provided in the third aspect, the chip provided in the fourth aspect, and the computer program product provided in the fifth aspect are all configured to perform the method provided in the embodiment of this application. Therefore, for beneficial effects that can be achieved by the electronic device, the computer storage medium, the chip, and the computer program product, refer to the beneficial effects in the corresponding method. Details are not described herein again.

## BRIEF DESCRIPTION OF DRAWINGS

FIG. 1 is a diagram of human body key point location distribution according to an embodiment of this application;
FIG. 2A is a schematic diagram of a 2D coordinate system for determining location information of a 2D key point according to an embodiment of this application;
FIG. 2B is a schematic diagram of a 3D coordinate system for determining location information of a 3D key point according to an embodiment of this application;
FIG. 3 is a schematic diagram of a human body key point detection scenario according to an embodiment of this application;
FIG. 4A and FIG. 4B are schematic diagrams of 3D key points detected by an electronic device 100 according to embodiments of this application;
FIG. 5 is a schematic diagram of a structure of an electronic device 100 according to an embodiment of this application;
FIG. 6A to FIG. 6D are schematic diagrams of some human body key point detection scenarios according to embodiments of this application;
FIG. 7A and FIG. 7B are schematic diagrams of 3D key points detected by an electronic device 100 according to embodiments of this application;
FIG. 8 is a flowchart of a human body key point detection method according to an embodiment of this application;
FIG. 9A to FIG. 9C are schematic diagrams of some human body key point detection scenarios according to embodiments of this application;
FIG. 10 is a flowchart of another human body key point detection method according to an embodiment of this application;
FIG. 11A and FIG. 11B are a flowchart of another human body key point detection method according to an embodiment of this application;
FIG. 12 is a diagram of another human body key point location distribution according to an embodiment of this application; and
FIG. 13 is a flowchart of another human body key point detection method according to an embodiment of this application.

## DESCRIPTION OF EMBODIMENTS

The following clearly describes technical solutions in embodiments of this application in detail with reference to the accompanying drawings. In the descriptions of the embodiments of this application, unless otherwise specified, "/" indicates "or". For example, A/B may indicate A or B. A term "and/or" in this specification merely describes an association relationship between associated objects, and indicates that three relationships may exist. For example, A and/or B may indicate the following three cases: Only A exists, both A and B exist, and only B exists. In addition, in the descriptions of the embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited to "first" and "second" may explicitly or implicitly include one or more features. In the descriptions of the embodiments of this application, unless otherwise specified, "a plurality of" means two or more.

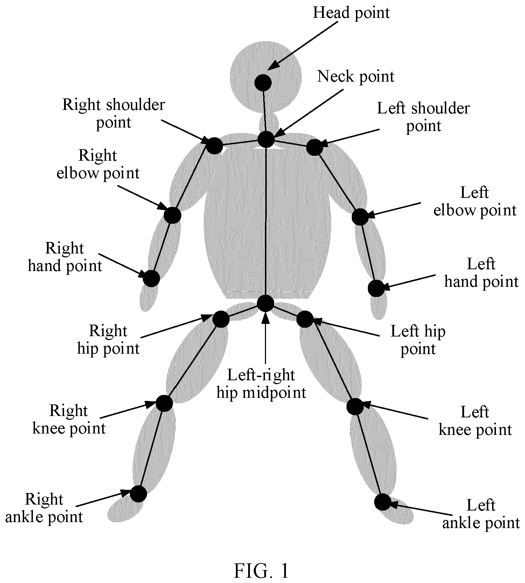

FIG. 1 is a diagram of an example of human body key point location distribution. As shown in FIG. 1, human body key points may include a head point, a neck point, a left shoulder point, a right shoulder point, a right elbow point, a left elbow point, a right hand point, a left hand point, a right hip point, a left hip point, a left-right hip midpoint, a right knee point, a left knee point, a right ankle point, and a left ankle point. Not limited to the foregoing key points, other key points may be further included in this embodiment of this application. This is not specifically limited herein.

The following specifically describes concepts of a 2D key point and a 3D key point in the embodiments of this application.

1. 2D key point

The 2D key point in the embodiments of this application may represent a key point distributed on a 2D plane. The electronic device may collect an image of a user by using a camera, and identify 2D key points of the user in the image. The 2D plane may be an image plane on which the image collected by the camera is located. That the electronic device identifies the 2D key points of the user in the image may be specifically: determining location information of the key points of the user on the 2D plane. The location information of the 2D key points may be represented by using two-dimensional coordinates on the 2D plane.

In a possible implementation, the location information of each 2D key point may be location information of each 2D key point that is obtained by using one 2D key point as a reference point. For example, if the left-right hip midpoint is used as a reference point, location information of the left-right hip midpoint on the 2D plane may be coordinates (0, 0), and then the electronic device may determine location information of another 2D key point based on a location of the another 2D key point relative to the left-right hip midpoint.

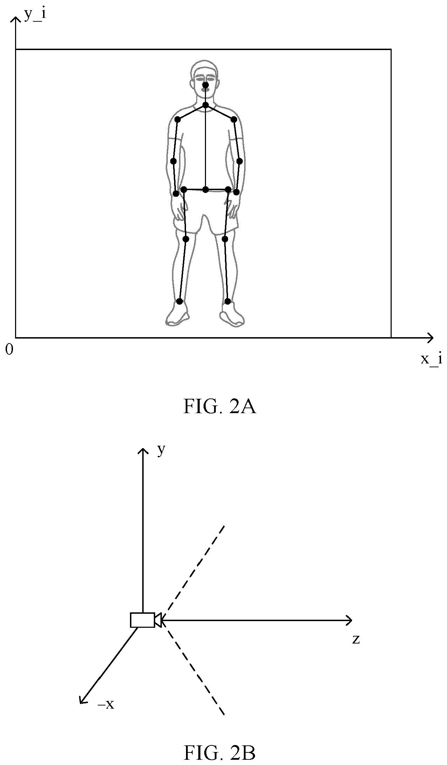

In another possible implementation, the electronic device may use the image plane as a basis to establish a 2D coordinate system x_i-y_i shown in FIG. 2A. In the 2D coordinate system, a vertex of an image collected by the camera may be used as an origin, a horizontal direction of a shot object in the image is used as a direction of an x_i axis in the 2D coordinate system, and a vertical direction of the shot object in the image is used as a direction of a y_i axis in the 2D coordinate system. The location information of each 2D key point may be two-dimensional coordinates of the key point of the user in the 2D coordinate system.

A method for determining the location information of the 2D key point is not limited in this embodiment of this application.

The electronic device may identify one group of 2D key points from one frame of image collected by the camera. The group of 2D key points may include all of the human body key points shown in FIG. 1. One group of 2D key points may be used to determine one human body model on the 2D plane.

2. 3D key point

The 3D key point in the embodiments of this application may represent a key point distributed in 3D space. The electronic device may estimate 3D key points of the user based on 2D key points by using a deep learning technology or the like. The 3D space may be 3D space in which the camera of the electronic device is located. That the electronic device determines the 3D key points of the user may be specifically: determining location information of the key points of the user in the 3D space. The location information of the 3D key points may be represented by using three-dimensional coordinates in the 3D space. Compared with the 2D key point, the location information of the 3D key point includes depth information of the key point of the user. In other words, the location information of the 3D key point may reflect a distance of the key point of the user relative to the camera.

In a possible implementation, the location information of each 3D key point may be location information of each 3D key point that is obtained by using one 3D key point as a reference point. For example, if the left-right hip midpoint is used as a reference point, location information of the left-right hip midpoint in the 3D space may be coordinates (0, 0, 0), and then the electronic device may determine location information of another 3D key point based on a location of the another 3D key point relative to the left-right hip midpoint.

In another possible implementation, the electronic device may use the 3D space in which the camera is located to establish a 3D coordinate system x-y-z shown in FIG. 2B. In the 3D coordinate system, an optical center of the camera may be used as an origin, a direction of an optical axis of the camera (that is, a direction perpendicular to the image plane) is used as a direction of a z-axis, and the direction of the x_i axis and the direction of the y_i axis in the 2D coordinate system shown in FIG. 2A are respectively a direction of an x-axis and a direction of a y-axis in the 3D coordinate system. The location information of each 3D key point may be three-dimensional coordinates of the key point of the user in the 3D coordinate system.

The 3D coordinate system shown in FIG. 2B is a right-hand coordinate system. Herein, -x may represent a negative direction of the x-axis. A method for establishing the 3D coordinate system is not limited in this embodiment of this application. For example, the 3D coordinate system may alternatively be a left-hand coordinate system. The electronic device may determine three-dimensional coordinates of the key point of the user in the left-hand coordinate system.

Not limited to determining the location information of the 3D key points by using the deep learning method, the electronic device may determine the location information of the 3D key points by using another method. For a specific implementation process in which the electronic device estimates the location information of the 3D key points based on the 2D key points, refer to implementation in the conventional technology. Details are not described in this embodiment of this application.

The electronic device may determine one group of 3D key points by using one group of 2D key points. Alternatively, the electronic device may determine one group of 3D key points by using a plurality of groups of 2D key points determined from a plurality of consecutive frames of images. The group of 3D key points may include all of the human body key points shown in FIG. 1. One group of 3D key points may be used to determine one human body model in the 3D space.

In some embodiments, the electronic device may perform 3D key point detection on one frame of image or a plurality of consecutive frames of images, to determine one group of 3D key points from the one frame of image or the plurality of consecutive frames of images. In other words, the electronic device may not need to first determine 2D key points of an image and then estimate 3D key points of the user based on the 2D key points. A specific method in which the electronic device performs 3D key point detection is not limited in this embodiment of this application.

In the following embodiments of this application, a human body key point detection method provided in this application is specifically described by using an example in which an electronic device first determines 2D key points of an image and then estimates 3D key points of a user based on the 2D key points.

Person perspective deformation in an image collected by a camera affects accuracy of 3D key point detection. The following describes the impact of perspective deformation on 3D key point detection.

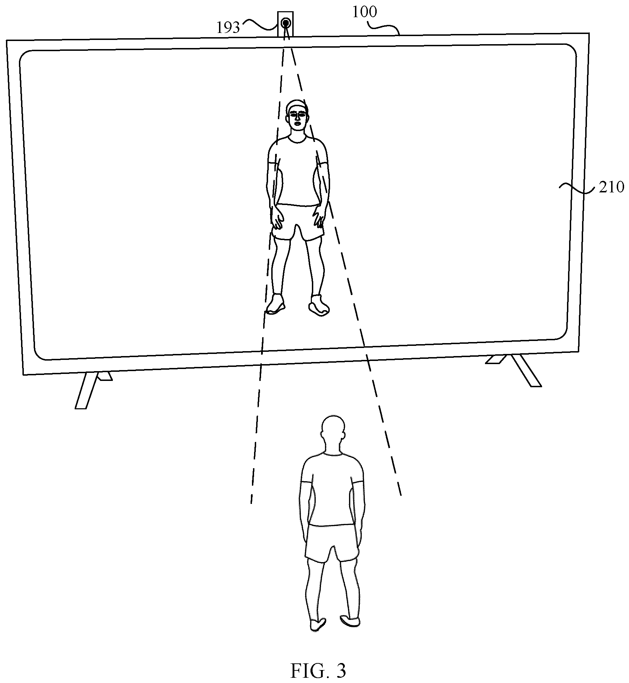

FIG. 3 is a schematic diagram of an example of a scenario in which an electronic device 100 implements smart fitness through human body 3D key point detection.

As shown in FIG. 3, the electronic device 100 may include a camera 193. The electronic device 100 may collect an image by using the camera 193. The image collected by the camera 193 may include an image of a user in a fitness process. The electronic device 100 may display, on a user interface 210, the image collected by the camera 193. Content displayed on the user interface 210 is not limited in this embodiment of this application.

The electronic device 100 may identify 2D key points of the user in the image collected by the camera 193. The electronic device 100 may estimate a group of 3D key points of the user based on the 2D key points. One group of 3D key points may be used to determine one human body model of the user in 3D space. The human body model determined based on the 3D key points may reflect a user posture. More accurate location information of the 3D key points indicates that the human body model determined based on the 3D key points can more accurately reflect the user posture.

Different products have different pitch angles, fields of view, and heights of cameras. In a process in which the camera collects images, a distance between the user and the camera may change. Due to the foregoing factor, perspective deformation exists in the image collected by the camera. If the electronic device 100 determines 2D key points of the user by using an image with perspective deformation, a length-width ratio of a human body model determined based on the 2D key points is different from a length-width ratio of an actual human body of the user. The electronic device 100 determines 3D key points of the user by using the 2D key points. There is an error in location information of the foregoing 3D key points. The human body model determined based on the 3D key points cannot accurately reflect the user posture.

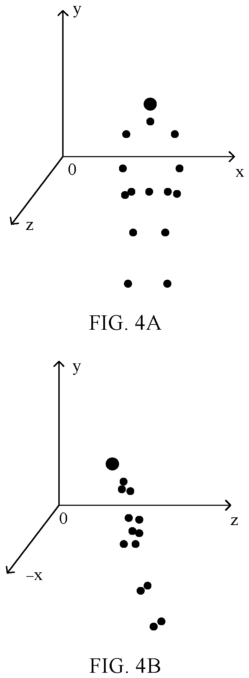

From different orientations, FIG. 4A and FIG. 4B show examples of a group of 3D key points determined by the electronic device 100 when the user is in a standing posture.

A 3D coordinate system shown in FIG. 4A may be the 3D coordinate system x-y-z shown in FIG. 2B. FIG. 4A shows a group of 3D key points of the user from the direction of the z-axis. The orientation is equivalent to observing a user posture from the back of the user. It can be learned from FIG. 4A that a user posture reflected by a human body model determined based on the group of 3D key points is the standing posture.

A 3D coordinate system shown in FIG. 4B may be the 3D coordinate system x-y-z shown in FIG. 2B. Herein, z may represent a positive direction of the z-axis. The positive direction of the z-axis is a direction in which the camera points to a shot object. FIG. 4B shows a group of 3D key points of the user from a negative direction of the x-axis. The orientation is equivalent to observing a user posture from a side of the user. It can be learned from FIG. 4B that a human body model determined based on the group of 3D key points leans forward in a direction in which the camera 193 is located. When the user is in the standing posture, the human body model determined based on the group of 3D key points should be perpendicular to a plane x-0-z. Due to image perspective deformation, the human body model determined based on the group of 3D key points is in a lean-forward posture shown in FIG. 4B. A larger degree at which a group of 3D human body models lean forward in the direction in which the camera 193 is located indicates a larger degree of person perspective deformation in an image collected by the camera 193.

This application provides a human body key point detection method. The method may be applied to an electronic device provided with a monocular camera. The electronic device may detect human body 3D key points by using an image collected by the monocular camera. The monocular camera may be the camera 193 in the electronic device 100. The method can reduce costs and improve accuracy of detecting location information of 3D key points.

Specifically, the electronic device may identify 2D key points of a user in the image collected by the camera, and estimate 3D key points of the user based on the 2D key points. The electronic device may determine, based on the 3D key points, whether the user is in a leg upright posture. The electronic device may calculate, by using a group of 3D key points determined when the user is in the leg upright posture, a compensation angle between an image plane and a human body model that is determined by using the group of 3D key points. Further, the electronic device may correct location information of the 3D key points by using the compensation angle, so as to reduce an error caused by image perspective deformation to the location information of the 3D key points, and improve accuracy of detecting the location information of the 3D key points.

The image plane is a plane on which the image collected by the camera is located (that is, a plane perpendicular to an optical axis of the camera).

When the user is in the leg upright posture, an included angle between the image plane and a straight line on which legs of the user are located should be 0 or a value approximate to 0. When detecting that the user is in the leg upright posture, the electronic device may determine a degree of person perspective deformation in the image by using an included angle between the image plane and a straight line on which leg 3D key points of the user are located, and correct location information of the 3D key points. Compared with a method for detecting 3D key points by using an image collected by a plurality of cameras, the foregoing method may require only one camera, thereby achieving lower costs and lower calculation complexity.

In a process in which the user performs fitness or plays a somatic game, a motion area usually does not change greatly. In other words, in the fitness or somatic gaming process, a degree of person perspective deformation in an image collected by the camera does not change greatly. In the fitness or somatic gaming process, when the user is in the leg upright posture at one time in the process, the electronic device may detect an included angle between the image plane and a straight line on which leg 3D key points of the user are located, and use the included angle as a compensation angle, to correct location information of 3D key points determined in the fitness or somatic gaming process.

Optionally, in the fitness or somatic gaming process, if the electronic device detects for a plurality of times that the user is in the leg upright posture, the electronic device may update the compensation angle. To be specific, when detecting last time that the user is in the leg upright posture, the electronic device may use an included angle between the image plane and a straight line on which leg 3D key points of the user are located as the compensation angle, to correct location information of 3D key points determined in a subsequent phase in the fitness or somatic gaming process. The foregoing method can reduce impact of a change of a location between the user and the camera on correction of location information of 3D key points, and improve accuracy of corrected location information of the 3D key points.

For example, in the somatic gaming scenario, the electronic device may determine 3D key points of the user based on an image collected by the camera, and determine a virtual character in a somatic game based on the 3D key points. The electronic device may display the virtual character on a user interface. The virtual character may reflect a user posture. For example, if the user jumps forward, the virtual character also jumps forward. Before the location information of the 3D key points is corrected, the location information of the 3D key points has an error due to image perspective deformation. Therefore, there is a difference between a posture of the virtual character and an actual posture of the user. For example, the user is actually in a standing posture, but the virtual character may be in a body-lean-forward posture. In this case, an action that may be actually completed by the user is standard, but the electronic device 100 determines that the action of the user is not standard and indicates that the user fails in game completion. Consequently, user gaming experience is affected.

After the location information of the 3D key points is corrected, the posture of the virtual character is more consistent with the actual posture of the user. In this way, during fitness or somatic gaming, the electronic device 100 can more accurately determine whether a user posture is correct, whether a user action amplitude meets a requirement, and the like, so that better user experience is implemented during fitness or somatic gaming.

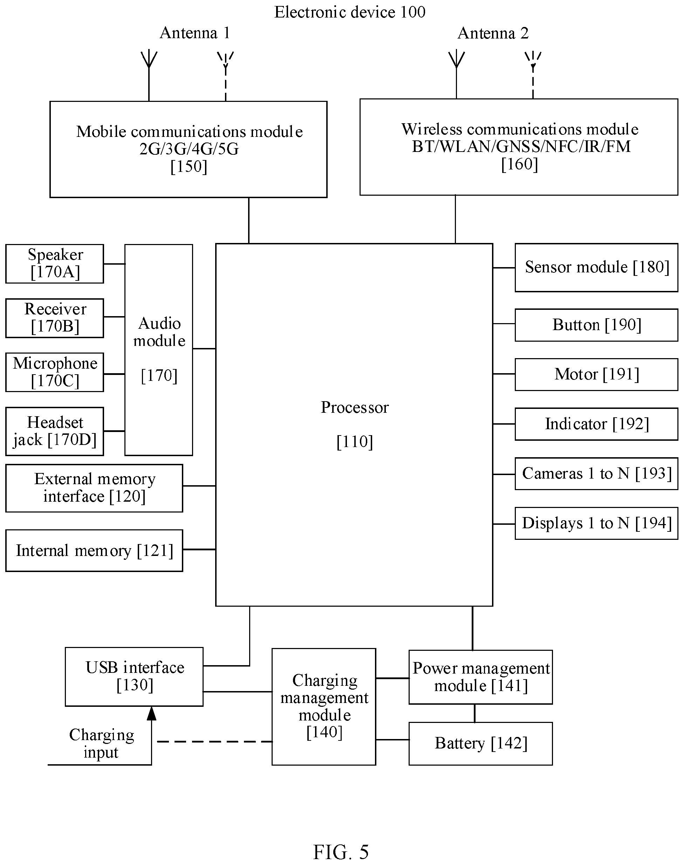

FIG. 5 is a schematic diagram of an example of a structure of an electronic device 100 according to an embodiment of this application.

As shown in FIG. 5, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, and the like.

It may be understood that the structure shown in this embodiment of the present invention does not constitute a specific limitation on the electronic device 100. In some other embodiments of this application, the electronic device 100 may include more or fewer components than the components shown in the figure, or combine some components, or split some components, or use different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to perform data transmission between the electronic device 100 and a peripheral device, or may be configured to connect to a headset to play audio by using the headset, or may be configured to connect to another electronic device such as an AR device.

The charging management module 140 is configured to receive a charging input from the charger. When charging the battery 142, the charging management module 140 may further supply power to the electronic device 100 by using the power management module 141.

The power management module 141 is configured to connect to the battery 142, the charging management module 140, and the processor 110. The power management module 141 receives an input from the battery 142 and/or an input from the charging management module 140, and supplies power to the processor 110, the internal memory 121, an external memory, the display 194, the camera 193, the wireless communications module 160, and the like.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communications module 150 may provide a solution that is applied to the electronic device 100 and that includes wireless communication such as 2G/3G/4G/5G. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave for radiation through the antenna 1. In some embodiments, at least some function modules in the mobile communications module 150 may be disposed in the processor 110. In some embodiments, at least some function modules in the mobile communications module 150 may be disposed in a same component as at least some modules in the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communications module 150 or another function module.

The wireless communications module 160 may provide a solution that is applied to the electronic device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function by using the ISP, the camera 193, the video codec, the GPU, the display 194, the application processor, or the like.

The ISP is configured to process data fed back by the camera 193. For example, during shooting, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An object is projected onto a photosensitive element by generating an optical image through a lens. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal of a format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural network (neural network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, for example, image recognition, facial recognition, speech recognition, and text understanding.

The external memory interface 120 may be configured to connect to an external storage card, for example, a micro SD card, to expand a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 executes various function applications of the electronic device 100 and data processing by running the instructions stored in the internal memory 121. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 may be disposed in the processor 110.

The speaker 170A, also referred to as a "horn", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, or the like. The button 190 may be a mechanical button or a touch button. The electronic device 100 may receive a key input, and generate a key signal input related to a user setting and function control of the electronic device 100.

The motor 191 may generate a vibration prompt. The motor 191 may be configured to provide a touch vibration feedback. For example, touch operations performed on different applications (for example, shooting and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may alternatively be customized.

The indicator 192 may be an indicator light, may be configured to indicate a charging status and a battery level change, and may also be configured to indicate a message, a missed call, a notification, and the like.

Not limited to the components shown in FIG. 5, the electronic device 100 may include more or fewer components. The electronic device 100 in this embodiment of this application may be an electronic device of another type, such as a television, a mobile phone, a tablet computer, a notebook computer, an ultra-mobile personal computer (ultra-mobile personal computer, UMPC), a handheld computer, a netbook, a personal digital assistant (personal digital assistant, PDA), a portable multimedia player (portable multimedia player, PMP), a dedicated media player, or an augmented reality (augmented reality, AR)/virtual reality (virtual reality, VR) device. A specific type of the electronic device 100 is not limited in this embodiment of this application.

A human body key point detection method provided in an embodiment of this application is described below based on a scenario in which the user follows a fitness course in the electronic device 100 to perform fitness and the electronic device 100 detects 3D key points of the user.

The electronic device 100 may store a plurality of fitness courses. Optionally, the electronic device 100 may obtain a plurality of fitness courses from a cloud server. The fitness course usually includes a plurality of actions. There may be a preset rest time between two consecutive actions in the plurality of actions, and any two of the plurality of actions may be the same or may be different. The fitness course may be recommended by the electronic device based on historical fitness data of the user, or may be selected by the user based on an actual requirement. The fitness course may be played locally or online. This is not specifically limited herein.

One fitness course may include a plurality of sub-courses, and each sub-course may include one or more consecutive actions of the fitness course. The plurality of sub-courses may be classified based on an exercise type, an exercise purpose, an exercise part, and the like. This is not specifically limited herein.

For example, one fitness course includes three sub-courses. The first sub-course is warm-up exercise, the second sub-course is formal exercise, the third sub-course is stretch exercise, and any one of the foregoing three sub-courses includes one or more consecutive actions.

In this embodiment of this application, the fitness course may include content of one or more types in manners such as a video, an animation, a voice, and a text. This is not specifically limited herein.

Phase 1: Start a fitness course.

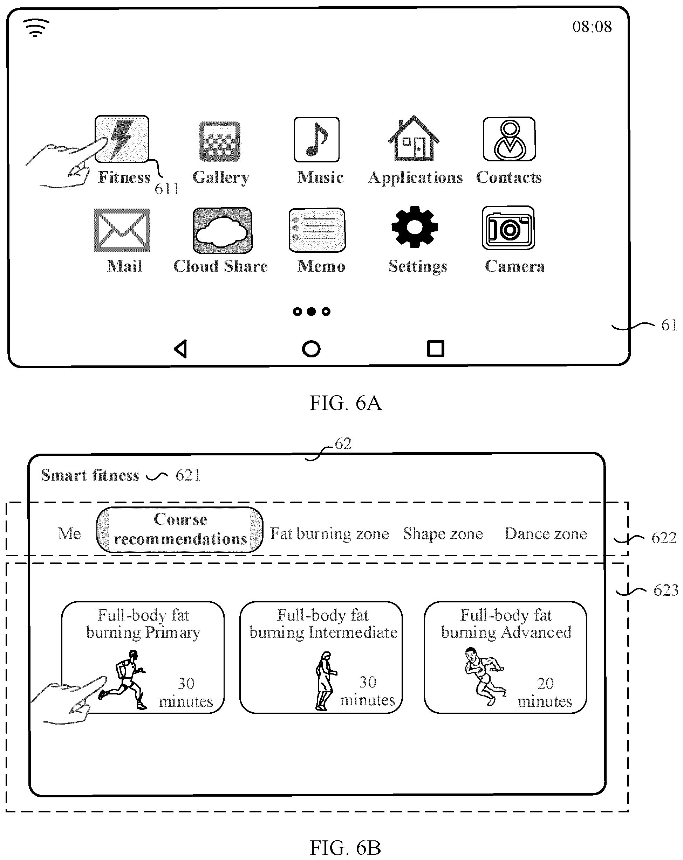

FIG. 6A shows an example of a user interface 61 for displaying, on the electronic device 100, an application installed on the electronic device 100.

The user interface 61 may include an icon 611 of an application "Fitness" and icons of other applications (such as "Email", "Gallery", and "Music"). An icon of any application may be used to respond to a user operation, for example, a touch operation, so that the electronic device 100 starts the application corresponding to the icon. The user interface 61 may further include more or less content. This is not limited in this embodiment of this application.

In response to a user operation performed on the icon 611 of "Fitness", the electronic device 100 may display a fitness course interface 62 shown in FIG. 6B. The fitness course interface 62 may include an application title bar 621, a function bar 622, and a display area 623.

The application title bar 621 may indicate that a current page is used to display a setting interface of the electronic device 100. The application title bar 621 may be represented in a form of text information "Smart fitness", a form of an icon, or another form.

The function bar 622 may include a user center control, a "Course recommendations" control, a "Fat burning zone" control, a "Shape zone" control, and a "Shape zone" control. Not limited to the foregoing controls, the function bar 622 may include more or fewer controls.

In response to a user operation performed on any control in the function bar 622, the electronic device 100 may display, in the display area 623, content indicated by the control.

For example, in response to a user operation performed on the user center control, the electronic device 100 may display interface content of a user personal center in the display area 623. In response to a user operation performed on the "Course recommendations" control, the electronic device 100 may display one or more recommended fitness courses in the display area 623. As shown in FIG. 6B, course covers of a plurality of recommended courses are displayed in the display area 623. The course cover may include a course category, duration, and a name of a corresponding fitness course. In response to a user operation performed on any course cover, the electronic device 100 may start a fitness course corresponding to the course cover, and display exercise content in the fitness course.

The foregoing user operations are not limited in this embodiment of this application. For example, the user may further control, by using a remote control, the electronic device 100 to execute a corresponding instruction (for example, an instruction of starting the application "Fitness" or starting the fitness course).

The fitness course interface 62 may further include more or less content. This is not limited in this embodiment of this application.

In response to a user operation performed on a course cover of any fitness course (for example, a fitness course whose course name is "Full-body fat burning Primary"), the electronic device 100 may start the fitness course. In a process of playing the fitness course, the electronic device 100 needs to collect an image by using a camera. Therefore, before playing the fitness course, the electronic device 100 may prompt the user that the camera is to be enabled.

Phase 2: Determine a target user and an initial compensation angle, and correct location information of 3D key points by using the initial compensation angle.

The target user may indicate a user for which the electronic device 100 needs to detect 3D key points and record exercise data in a process in which the electronic device 100 plays the fitness course.

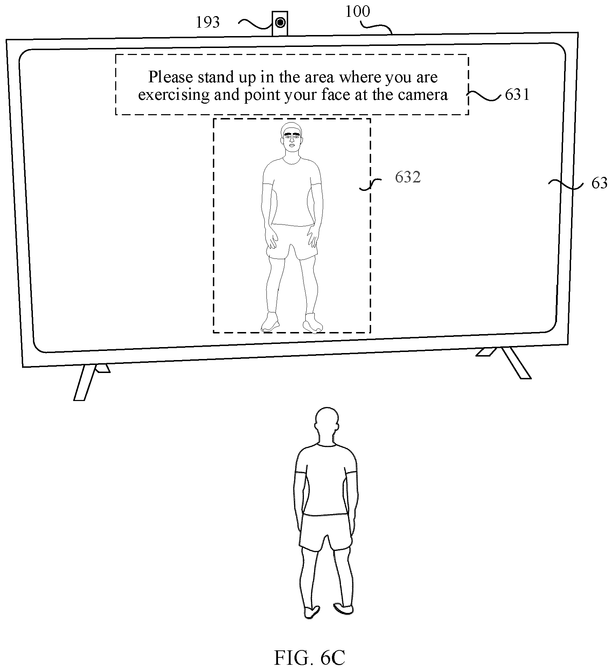

In some embodiments, as shown in FIG. 6C, the electronic device 100 may collect facial information of the user, to determine the target user in motion. Determining the target user helps the electronic device 100 track the user that needs to perform key point detection and accurately obtain exercise data of the target user. This can prevent a user other than the target user in a shooting range of the camera from interfering with a process in which the electronic device 100 detects key points of the target user and obtains exercise data of the target user.

In the foregoing process of determining the target user, the electronic device 100 may further determine the initial compensation angle. Before updating the initial compensation angle, the electronic device 100 may correct, by using the initial compensation angle, location information of 3D key points that are determined based on 2D key points after the fitness course starts to be played.

For example, the electronic device 100 may display a target user determining interface 63. The target user determining interface 63 may include a prompt 631 and a user image 632. The prompt may be used to prompt the user to perform a related operation of determining the target user and the initial compensation angle. The prompt may be a text prompt "Please stand up in the area where you are exercising and point your face at the camera". A form and specific content of the prompt are not limited in this embodiment of this application. The user image 632 is an image of the target user that is collected by the camera.

The user image collected by the camera may be used by the electronic device 100 to determine, in the process of playing the fitness course, the target user that needs to perform key point detection and exercise data recording. The electronic device 100 may track the target user by using a target tracking algorithm. For an implementation of the foregoing target tracking algorithm, refer to specific implementation of a target tracking algorithm in the conventional technology. Details are not described herein again.

The prompt prompts the user to stand up in an area in which the user is exercising, so that the electronic device 100 can determine the initial compensation angle.

Specifically, as prompted by the prompt 631, in a process in which the electronic device 100 determines the target user, the user stands up in the area in which the user is about to exercise. The electronic device 100 may collect one or more frames of images including user exercise postures, and identify one or more groups of 2D key points of the user from the one or more frames of images. Further, the electronic device 100 may estimate one group of 3D key points of the user based on the one or more groups of 2D key points. The electronic device 100 may determine, based on the group of 3D key points of the user, whether the user is in a leg upright posture. When determining that the user is in the leg upright posture, the electronic device 100 may calculate an included angle between an image plane and a straight line on which leg 3D key points of the user are located. If the included angle is less than a preset included angle, the electronic device 100 may determine the included angle as the initial compensation angle. Otherwise, the electronic device 100 may use a default angle as the initial compensation angle. The default angle may be prestored in the electronic device 100. The default angle may be used as a general compensation angle to correct location information of the 3D key points, thereby reducing an error caused by person perspective deformation in the image to the location information of the 3D key points. The default angle may be set based on an empirical value. A value of the default angle is not limited in this embodiment of this application.

The electronic device 100 determines whether the included angle between the image plane and the straight line on which the 3D key points are located is less than the preset included angle, and determines the included angle as the initial compensation angle when the included angle is less than the preset included angle. This can avoid a case in which the initial compensation angle is an impossible value because of an error in calculating the included angle between the image plane and the straight line on which the 3D key points are located. The preset included angle may be, for example, 45°. The value of the preset included angle is not limited in this embodiment of this application.

When determining the target user and the initial compensation angle, the electronic device 100 may play the fitness course. In the process of playing the fitness course, the electronic device 100 may collect an image by using the camera, and identify 2D key points of the user in the image. The electronic device 100 may determine 3D key points of the user based on the 2D key points. The electronic device 100 may correct location information of the 3D key points by using the initial compensation angle.

The electronic device 100 may perform 2D key point detection on each frame of image. For a frame of image, the electronic device 100 may identify a group of 2D key points corresponding to the frame of image. The electronic device 100 may determine a group of 3D key points by using the group of 2D key points. The group of 3D key points may be used to determine one human body model. The human body model may reflect a user posture in the frame of image.

Optionally, the electronic device 100 may perform 2D key point detection on each frame of image. For a plurality of consecutive frames of images, the electronic device 100 may identify a plurality of groups of 2D key points corresponding to the plurality of consecutive frames of images. The electronic device 100 may determine one group of 3D key points by using the plurality of groups of 2D key points. The group of 3D key points may be used to determine one human body model. The human body model may reflect a user posture in the plurality of consecutive frames of images. Compared with determining 3D key points by using 2D key points identified from one frame of image, determining 3D key points by using 2D key points identified from a plurality of consecutive frames of images can more accurately reflect a user posture.

The method for determining the target user is not limited in this embodiment of this application. For example, the electronic device 100 may determine the target user by detecting whether a user action matches a preset action. The preset action may be bending the arms upward. Before starting to play the fitness course, the electronic device 100 may display, on the target user determining interface 63 shown in FIG. 6C, an example of an action of bending the arms upward and a prompt used to prompt the user to bend the arms upward. In addition, the electronic device 100 may perform human body posture detection based on the image collected by the camera. The electronic device 100 may determine, as the target user, a user whose detected posture is the same as the posture of bending the arms upward. When the user performs an action (for example, bending the arms upward) indicated to be completed by the user in the process of determining the target user, the user is in a leg upright posture. In this case, in the process of determining the target user, the electronic device 100 may further determine the initial compensation angle according to the method in the foregoing embodiment.

A type of the preset action is not limited in this embodiment of this application.

In some embodiments, when playing one fitness course, the electronic device 100 may obtain an action included in the fitness course. When playing one fitness course, the electronic device 100 may detect a user whose action matches an action in the fitness course, to determine the target user. In addition, the electronic device 100 may use the default angle as the initial compensation angle, and correct, by using the default angle, location information of 3D key points determined by the electronic device 100. In other words, the electronic device 100 may determine the target user and the initial compensation angle without using the method shown in FIG. 6C.

Optionally, at a moment at which one fitness course starts to be played or in a time period (for example, 3 seconds) after one fitness course starts to be played, if the electronic device 100 detects that the user is in the leg upright posture, the electronic device 100 may determine the initial compensation angle based on 3D key points used when it is detected that the user is in the leg upright posture. The initial compensation angle is an included angle between the image plane and a straight line on which leg 3D key points in the 3D key points are located.

Phase 3: Update a compensation angle, and correct the location information of the 3D key points by using an updated compensation angle.

When one fitness course is played, the electronic device 100 may obtain an action included in the fitness course. The electronic device 100 may determine whether the action in the fitness course includes a leg upright action (for example, a standing action or an action of front standing up with arms up).

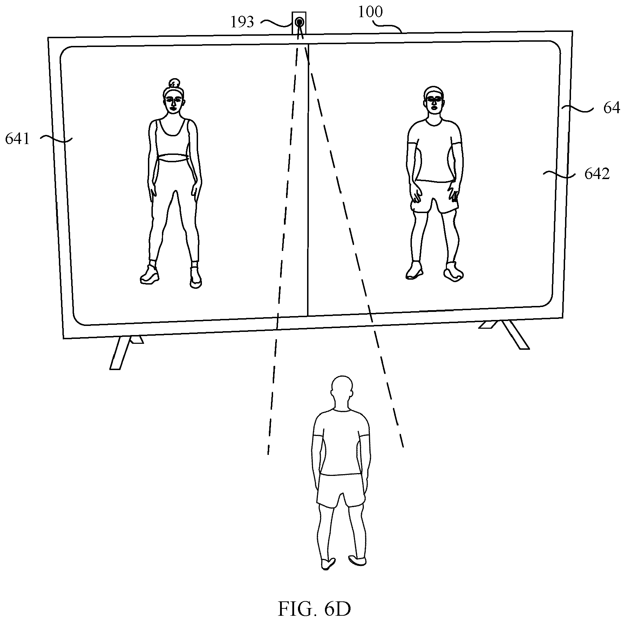

As shown in FIG. 6D, in a process of playing a fitness course, the electronic device 100 may display a user interface 64 shown in FIG. 6D. The user interface 64 may include a fitness course window 641 and a user fitness window 642.

The fitness course window 641 may be configured to display specific content of the fitness course, for example, an image of an action taken by a coach in the fitness course.

The user fitness window 642 may be configured to display, in real time, an image of a target user that is collected by the camera.

A distribution manner of the fitness course window 641 and the user fitness window 642 on the user interface 64 is not limited in this embodiment of this application. The fitness course window 641 and the user fitness window 642 may further include more content. This is not limited in this embodiment of this application.

When the fitness course is played to a moment t1, an action that the fitness course indicates the user to complete is a leg upright action, for example, a standing action. As shown in FIG. 6D, an action of the coach in the fitness course window 641 is a standing action. The user may perform the standing action according to the action indication of the coach in the fitness course window 641. The electronic device 100 may obtain 3D key points by using an image collected by the camera at a moment near the moment t1. The electronic device 100 may determine, based on the 3D key points, whether the user is in a leg upright posture. If the user is in the leg upright posture, the electronic device 100 may calculate an included angle between the image plane and a straight line on which leg 3D key points of the user are located. If the included angle is less than the preset included angle in the foregoing embodiment, the electronic device 100 may determine the included angle as the compensation angle. The electronic device 100 may update a previous compensation angle by using the compensation angle, and correct the location information of the 3D key points by using an updated compensation angle.

When the user is indicated to complete the leg upright action for the first time in the fitness course, a compensation angle updated by using a compensation angle calculated by the electronic device 100 is the initial compensation angle in the foregoing embodiment. When the user is indicated to complete the leg upright action for the second time in the fitness course and a subsequent phase, a compensation angle updated by using a compensation angle calculated by the electronic device 100 may be the compensation angle calculated when the electronic device 100 detects last time that the user is in the leg upright posture.

It can be learned from the foregoing embodiment that, when the fitness course indicates the user to complete the leg upright action, the electronic device 100 may detect whether the user is in the leg upright posture. If the user is in the leg upright posture, the electronic device 100 may update the compensation angle used to correct the location information of the 3D key points. The updated compensation angle is an included angle that is between the image plane and a straight line on which leg 3D key points of the user that are used when the user is in the leg upright posture are located and that is calculated by the electronic device 100. The updated compensation angle can more accurately reflect a degree of person perspective deformation in the image collected by the camera at a current location of the user. In other words, the electronic device 100 may correct the location information of the 3D key points by using the updated compensation angle. A human body model determined based on the corrected 3D key points can more accurately reflect a user posture, thereby improving accuracy of posture detection. In this way, during fitness or somatic gaming, the electronic device 100 can more accurately determine whether a user posture is correct, whether a user action amplitude meets a requirement, and the like, so that better user experience is implemented during fitness or somatic gaming.

In some embodiments, the electronic device 100 may determine, in a process of playing a fitness course, one group of 3D key points by using one group of 2D key points that are identified from one frame of image or a plurality of groups of 2D key points that are identified from a plurality of consecutive frames of images. The group of 3D key points may determine one human body model. The electronic device 100 may determine, by using the group of 3D key points, whether the user is in the leg upright posture. If the user is in the leg upright posture, the electronic device 100 may calculate an included angle between the image plane and a straight line on which leg 3D key points of the user are located. If the included angle is less than the preset included angle in the foregoing embodiment, the electronic device 100 may update the compensation angle. The updated compensation angle is the foregoing included angle. The electronic device 100 may correct the location information of the 3D key points by using the updated compensation angle.

In other words, each time the electronic device 100 determines a group of 3D key points, the electronic device 100 may determine, by using the group of 3D key points, whether to update the compensation angle used to correct the location information of the 3D key points.

Not limited to the foregoing smart fitness scenario, the human body key point detection method provided in this embodiment of this application may be further applied to another scenario of implementing posture detection through 3D key point detection.

The following describes a method for determining whether a user is in a leg upright posture and determining a compensation angle when the user is in the leg upright posture according to an embodiment of this application.

In some embodiments, that the user is in the leg upright posture may mean that both legs of the user are upright.

When the legs of the user are upright, an included angle between the thigh and the shank of each leg needs to be 180° or a value approximate to 180°. The electronic device 100 may determine, by using 3D key points determined based on 2D key points, whether the included angle between the thigh and the shank of the user is approximate to 180°, to determine whether the user is in the leg upright posture.

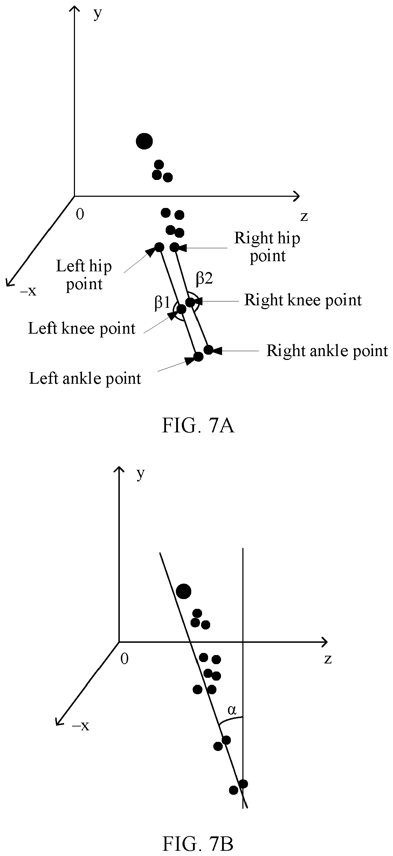

FIG. 7A is a schematic diagram of an example of a group of 3D key points. As shown in FIG. 7A, an included angle between a straight line on which the left thigh of the user is located (that is, a straight line on which a connection line between a left hip point and a left knee point is located) and a straight line on which the left shank is located (that is, a straight line on which a connection line between the left knee point and a left ankle point is located) is $\beta 1$. An included angle between a straight line on which the right thigh of the user is located (that is, a straight line on which a connection line between a right hip point and a right knee point is located) and a straight line on which the right shank is located (that is, a straight line on which a connection line between the right knee point and a right ankle point is located) is $\beta 2$. The electronic device 100 may calculate a difference between $\beta 1$ and 180° and a difference between $\beta 2$ and 180°. If both the difference between $\beta 1$ and 180° and the difference between $\beta 2$ and 180° are less than a preset difference, the electronic device 100 may determine that the user is in the leg upright posture. The preset difference is a value approximate to 0. The preset difference may be set based on experience. A value of the preset difference is not limited in this embodiment of this application.

Further, when determining that the user is in the leg upright posture, the electronic device 100 may calculate an included angle $\alpha 1$ between the image plane and a straight line on which a connection line between the left hip point and the left ankle point is located, and an included angle $\alpha 2$ between the image plane and a straight line on which a connection line between the right hip point and the right ankle point is located. The electronic device 100 may calculate an average value of the included angle $\alpha 1$ and the included angle $\alpha 2$, to obtain an included angle $\alpha$ shown in FIG. 7B. If the included angle $\alpha$ is less than the preset included angle in the foregoing embodiment, the electronic device 100 may determine the included angle $\alpha$ as a compensation angle, and correct location information of the 3D key points by using the compensation angle.

Optionally, when determining that the user is in the leg upright posture, the electronic device 100 may determine a first projected straight line of the straight line on which the connection line between the left hip point and the left ankle point is located on a 3D coordinate system y-0-z plane shown in FIG. 7A and a second projected straight line of the straight line on which the connection line between the right hip point and the right ankle point is located on the 3D coordinate system y-0-z plane shown in FIG. 7A. The electronic device 100 may calculate an included angle $\alpha 3$ between the first projected straight line and a positive direction of a y-axis in the 3D coordinate system shown in FIG. 7A, and an included angle $\alpha 4$ between the second projected straight line and a positive direction of the y-axis in the 3D coordinate system shown in FIG. 7A. The electronic device 100 may calculate an average value of the included angle $\alpha 3$ and the included angle $\alpha 4$, to obtain an included angle $\alpha$ shown in FIG. 7B. If the included angle $\alpha$ is less than the preset included angle in the foregoing embodiment, the electronic device 100 may determine the included angle $\alpha$ as a compensation angle, and correct location information of the 3D key points by using the compensation angle.

In some embodiments, that the user is in the leg upright posture may mean that a single leg of the user is upright. The electronic device 100 may determine, according to the method in the foregoing embodiment, whether either of the two legs of the user is upright. If the electronic device 100 determines that one of the two legs of the user is upright, the electronic device 100 may determine that the user is in the leg upright posture. Further, the electronic device 100 may calculate an included angle between the image plane and a straight line on which a connection line between a hip point and an ankle point on the leg is located. If the included angle is less than the preset included angle in the foregoing embodiment, the electronic device 100 may determine the included angle as a compensation angle, and correct location information of the 3D key points by using the compensation angle.

The following describes a method for correcting the location information of the 3D key points by using the compensation angle $\alpha$ according to an embodiment of this application.

The electronic device 100 may correct the location information of the 3D key points according to Formula (1):

$$\begin{bmatrix} x' \\ y' \\ z' \end{bmatrix} = \begin{bmatrix} 1 & 0 & 0 \\ 0 & \cos\alpha & -\sin\alpha \\ 0 & \sin\alpha & \cos\alpha \end{bmatrix} * \begin{bmatrix} x \\ y \\ z \end{bmatrix} \quad (1)$$

Herein, $\begin{bmatrix} x \\ y \\ z \end{bmatrix}$ is uncorrected location informa-

tion of a 3D key point, $\begin{bmatrix} x \\ y \\ z \end{bmatrix}$ is obtained by the electronic device 100 through estimation based on a 2D key point,

and $\begin{bmatrix} x' \\ y' \\ z' \end{bmatrix}$ is corrected location information of the foregoing 3D key point.

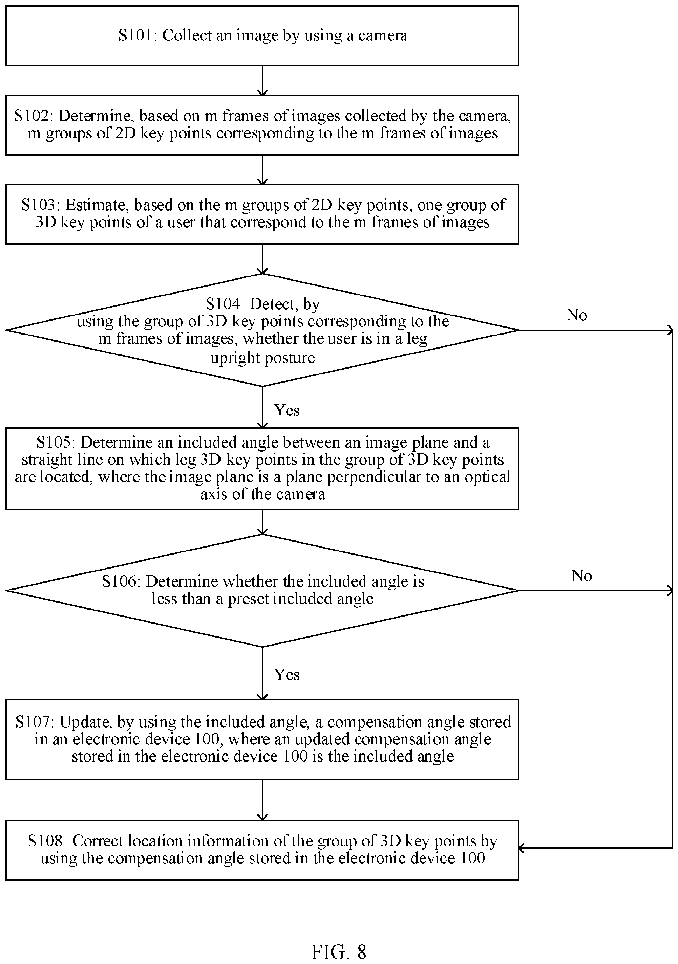

FIG. 8 is a flowchart of an example of a human body key point detection method according to an embodiment of this application.

As shown in FIG. 8, the method may include steps S101 to S108.

S101: An electronic device 100 may collect an image by using a camera.

In some embodiments, the camera and the electronic device 100 may be integrated. As shown in FIG. 3, the electronic device 100 may include the camera 193.

In some other embodiments, the camera and the electronic device 100 may be two separate devices. A communication connection is established between the camera and the electronic device 100. The camera may send the collected image to the electronic device 100.

In some embodiments, in response to a user operation of starting a fitness course, the electronic device 100 may enable the camera or send an instruction for instructing to enable the camera to the camera. As shown in FIG. 6C, in response to a user operation performed on a determining control 624A, the electronic device 100 may enable the camera.

A time at which the camera is enabled is not limited in this embodiment of this application. For example, the camera may alternatively be enabled before the electronic device 100 receives the user operation of starting the fitness course.

S102: The electronic device 100 may determine, based on m frames of images collected by the camera, m groups of 2D key points corresponding to the m frames of images.

In some embodiments, the electronic device 100 may perform, in a fitness course playing process, 2D key point detection on the image collected by the camera. In other words, the m frames of images are collected by the camera in the fitness course playing process.

A value of m is a positive integer. The electronic device 100 may identify, from a frame of image, a group of 2D key points of a user in the frame of image. The electronic device 100 may perform 2D key point detection on the image by using a deep learning method (for example, an openpose algorithm). A method in which the electronic device 100 identifies a 2D key point is not limited in this embodiment of this application. For an implementation process in which the electronic device 100 identifies a 2D key point, refer to an implementation process in the conventional technology. Details are not described herein again.

S103: The electronic device 100 may estimate, based on the m groups of 2D key points, one group of 3D key points of the user that correspond to the m frames of images.

If m is 1, for each frame of image, the electronic device 100 may identify one group of 2D key points from one frame of image. Further, the electronic device 100 may estimate, by using the group of 2D key points corresponding to the frame of image, one group of 3D key points corresponding to the frame of image.

If m is an integer greater than 1, the m frames of images are a plurality of consecutive frames of images collected by the camera. The electronic device 100 may estimate one group of 3D key points based on the plurality of consecutive frames of images. Specifically, the electronic device 100 may identify a plurality of groups of 2D key points from the plurality of consecutive frames of images. The electronic device 100 may estimate, by using the plurality of groups of 2D key points corresponding to the plurality of frames of images, the group of 3D key points corresponding to the plurality of frames of images.

A method for estimating a 3D key point by using a 2D key point is not limited in this embodiment of this application. For an implementation process in which the electronic device 100 estimates a 3D key point, refer to an implementation process in the conventional technology. Details are not described herein again.

S104: The electronic device 100 may detect, by using the group of 3D key points corresponding to the m frames of images, whether the user is in a leg upright posture.

When the electronic device 100 has determined the group of 3D key points, the electronic device 100 may detect, based on location information of the group of 3D key points, whether the user is in the leg upright posture. For a method in which the electronic device 100 detects whether the user is in the leg upright posture, refer to the embodiment shown in FIG. 7A.

If the electronic device 100 detects that the user is in the leg upright posture, the electronic device 100 may perform step S105.

If the electronic device 100 detects that the user is not in the leg upright posture, the electronic device 100 may perform step S108.

S105: If the electronic device 100 detects that the user is in the leg upright posture, the electronic device 100 may determine an included angle between an image plane and a straight line on which leg 3D key points in the group of 3D key points are located, where the image plane is a plane perpendicular to an optical axis of the camera.

When the user is in the leg upright posture, the included angle between the image plane and the straight line on which the legs of the user are located should be a value approximate to 0. The electronic device 100 may determine, by detecting the included angle between the image plane and the straight line on which the leg 3D key points of the user are located, a degree of person perspective deformation in the image collected by the camera, to correct the location information of the 3D key points.

When obtaining the group of 3D key points corresponding to the m frames of images and detecting that the user is in the leg upright posture, the electronic device 100 may determine the included angle between the image plane and the straight line on which the leg 3D key points in the group of 3D key points are located. For a method in which the electronic device 100 calculates the included angle, refer to the descriptions of the embodiment shown in FIG. 7A. Details are not described herein again.

S106: The electronic device 100 may determine whether the included angle is less than a preset included angle.

If the electronic device 100 determines that the included angle is less than the preset included angle, the electronic device 100 may perform step S107, to update a compensation angle stored in the electronic device 100.

If the electronic device 100 determines that the included angle is greater than or equal to the preset included angle, the electronic device 100 may perform step S108, to correct, by using a compensation angle stored in the electronic device 100, the location information of the group of 3D key points corresponding to the m frames of images.

There may be an error in calculating the included angle by the electronic device 100, and consequently the calculated included angle is excessively large. For example, the included angle calculated by the electronic device 100 is 70°. However, when the user is in the leg upright posture, impact of person perspective deformation in the image on the 3D key points obviously does not cause the included angle between the image plane and the straight line on which the leg 3D key points of the user are located to reach 70°. The electronic device 100 determines, by setting the preset included angle, whether the calculated included angle can be used as a compensation angle for correcting the location information of the 3D key points. This avoids a case in which the compensation angle is an impossible value because of an error in calculating the included angle, and improves accuracy of 3D key point detection.

A value of the preset included angle may be set based on experience. For example, the preset included angle may be 45°. The value of the preset included angle is not limited in this embodiment of this application.

S107: If the included angle is less than the preset included angle, the electronic device 100 may update, by using the included angle, the compensation angle stored in the electronic device 100, where an updated compensation angle stored in the electronic device 100 is the included angle.

If the included angle is less than the preset included angle, the preset included angle may be used as the compensation angle for correcting the location information of the 3D key points. The electronic device 100 may update, by using the included angle, the compensation angle stored in the electronic device 100.

S108: The electronic device 100 may correct the location information of the group of 3D key points by using the compensation angle stored in the electronic device 100.

For a method in which the electronic device 100 corrects location information of a 3D key point by using a compensation angle, refer to the foregoing embodiment.

In some embodiments, the compensation angle stored in the electronic device 100 may be the updated compensation angle in step S107. The updated compensation angle is the included angle between the image plane and the straight line on which the leg 3D key points in the group of 3D key points corresponding to the m frames of images are located.

In some other embodiments, the compensation angle stored in the electronic device 100 may be an initial compensation angle in the foregoing embodiment. It can be learned from the foregoing embodiment that the initial compensation angle may be a default angle pre-stored in the electronic device 100. Alternatively, the initial compensation angle may be a compensation angle that is calculated when it is detected, before a fitness course is played, that the user is in the leg upright posture, as shown in FIG. 6C.

In other words, the electronic device 100 does not update the initial compensation angle in a time period T1 from a moment at which the electronic device 100 starts to play the fitness course to a moment at which the camera collects the m frames of images. The electronic device 100 may correct, by using the initial compensation angle, location information of each group of 3D key points determined in the time period T1.

In some other embodiments, the compensation angle stored in the electronic device 100 may be a compensation angle that is calculated when it is detected for the last time in the time period T1 that the user is in the leg upright posture.

In other words, in the time period T1, the electronic device 100 detects at least once that the user is in the leg upright posture. When detecting that the user is in the leg upright posture, the electronic device 100 may calculate an included angle between a leg 3D key point and the image plane based on a group of 3D key points determined when the user is in the leg upright posture this time. If the included angle can be used to correct location information of the 3D key points, the electronic device 100 may update a compensation angle, and use the included angle as a new compensation angle to replace a compensation angle that is calculated when the user is in the leg upright posture last time. The electronic device 100 may correct the location information of the 3D key points by using the stored compensation angle, until the stored compensation angle is updated. The electronic device 100 may correct, by using an updated compensation angle, location information of 3D key points that are determined after the compensation angle is updated.

In some embodiments, when playing a fitness course, the electronic device 100 determines whether an action in the fitness course includes a leg upright action. When the fitness course is played until the user is indicated to complete the leg upright action, the electronic device 100 may perform step S 104 shown in FIG. 8. In other words, the electronic device 100 may detect, by using the 3D key points determined based on the 2D key points, whether the user is in the leg upright posture. When detecting that the user is in the leg upright posture, the electronic device 100 may determine whether the included angle between the image plane and the straight line on which the leg 3D key points in the 3D key points are located can be used to correct the location information of the 3D key points. If the included angle can be used to correct the location information of the 3D key points, the electronic device 100 may update the compensation angle by using the included angle.

When the fitness course is played until the user is indicated to complete a leg nonupright action, the electronic device 100 may determine 2D key points of the user by using a currently collected image, and determine 3D key points of the user based on the 2D key points. The electronic device 100 may correct the foregoing 3D key points by using a compensation angle that is updated last time.

In other words, when the fitness course is played until the user is indicated to complete the leg upright action, the electronic device 100 may determine, by using the 3D key points determined based on the 2D key points this time, whether the user is in the leg upright posture. In this case, the electronic device 100 may not need to use each group of 3D key points determined based on the 2D key points to determine whether the user is in the leg upright posture and determine whether the compensation angle needs to be updated. This can reduce computing resources of the electronic device 100.

A time at which the electronic device 100 updates a compensation angle is not limited in this embodiment of this application. In addition to the method in the foregoing embodiment, the electronic device 100 may further regularly or irregularly detect whether the user is in the leg upright posture, and update the compensation angle when detecting that the user is in the leg upright posture.

It can be learned from the human body key point detection method shown in FIG. 8 that, when detecting that the user is in the leg upright posture, the electronic device 100 may determine, by using the included angle between the image plane and the straight line on which the leg 3D key points in the 3D key points determined based on the 2D key points are located, a degree of person perspective deformation in the image collected by the camera. Further, the electronic device 100 may correct the location information of the 3D key points. This reduces an error caused by image perspective deformation to the location information of the 3D key points, and improves accuracy of detecting the location information of the 3D key points. In this method, only one camera is required, which not only reduces costs, but also reduces calculation complexity of key point detection.

In addition, each time it is detected that the user is in the leg upright posture, if the included angle between the image plane and the straight line on which the leg 3D key points are located may be used to correct the location information of the 3D key points, the electronic device 100 may update the compensation angle. The updated compensation angle can more accurately reflect a degree of person perspective deformation in the image collected by the camera at a current location of the user. This can reduce impact of a change of a location between the user and the camera on correction of location information of 3D key points, and improve accuracy of corrected location information of the 3D key points. In other words, the electronic device 100 may correct the location information of the 3D key points by using the updated compensation angle. A human body model determined based on the corrected 3D key points can more accurately reflect a user posture, thereby improving accuracy of posture detection. In this way, during fitness or somatic gaming, the electronic device 100 can more accurately determine whether a user posture is correct, whether a user action amplitude meets a requirement, and the like, so that better user experience is implemented during fitness or somatic gaming.

In the human body key point detection method in the foregoing embodiment, the degree of person perspective deformation in the image collected by the camera is mainly determined when the user is in the leg upright posture. During actual application, for example, during fitness or somatic gaming, the user does not keep the leg upright posture. The user may perform an action such as squatting or lying sideways. When the user is not in the leg upright posture, the electronic device 100 may determine 2D key points by using the image collected by the camera, and determine one or more groups of 3D key points based on the 2D key points. According to the method shown in FIG. 8, the electronic device 100 can correct, only by using a compensation angle that is calculated when the electronic device 100 detects last time that the user is in the leg upright posture, location information of the one or more groups of 3D key points that are determined when the user is not in the leg upright posture.

Although an area in which the user moves is generally not excessively large, and the degree of person perspective deformation in the image collected by the camera does not change greatly, a change of a relative location between the user and the camera and a change of a user height in the image collected by the camera both affect the degree of person perspective deformation in the image collected by the camera. A compensation angle that is calculated by the electronic device 100 when the user is in the leg upright posture at a current moment cannot accurately reflect a degree of person perspective deformation in an image collected by the camera when the user is not in the leg upright posture at a later moment The electronic device 100 corrects, by using a compensation angle that is calculated when the electronic device 100 detects last time that the user is in the leg upright posture, location information of one or more groups of 3D key points that are determined when the user is not in the leg upright posture. Corrected location information of the 3D key points is still inaccurate.

It can be learned from a perspective deformation principle that, when the camera is placed at a same location and at a same angle, a shorter distance between the user and the camera indicates a larger degree of person perspective deformation in an image collected by the camera (that is, a larger compensation angle $\alpha$ shown in FIG. 4B). A smaller user height in the image collected by the camera indicates a larger degree of person perspective deformation in the image collected by the camera (that is, a larger compensation angle $\alpha$ shown in FIG. 4B). For example, an action of the user changes from standing to squatting, and a user height in an image collected by the camera becomes smaller, resulting in a larger degree of person perspective deformation in the image collected by the camera. The distance between the user and the camera becomes larger, and the user height in the image collected by the camera becomes smaller, resulting in a larger degree of person perspective deformation in the image collected by the camera.

This application provides a human body key point detection method. In the method, a degree of person perspective deformation in an image can be determined in real time when a user is not limited to keeping a leg upright posture, and location information of a 3D key point determined based on a 2D key point is corrected. Specifically, the electronic device 100 may determine an initial compensation angle. For a method for determining the initial compensation angle, refer to the descriptions in the foregoing embodiment. Details are not described herein again. The electronic device 100 may determine a person perspective deformation degree variation between two adjacent frames of images based on a change of a location of the user in the two adjacent frames of images. A sum of a degree of person perspective deformation in a previous frame of image and the person perspective deformation degree variation between the two adjacent frames of images is a degree of person perspective deformation in a current frame of image. The degree of person perspective deformation in the previous frame of image may be obtained by accumulating a person perspective deformation degree variation between two adjacent frames of images before the previous frame of image based on the initial compensation angle.

It can be learned from the foregoing method that, even if the user is not in the leg upright posture, the electronic device 100 may also determine a degree of person perspective deformation in an image collected by a camera. The electronic device 100 corrects the location information of the 3D key point based on the degree of person perspective deformation in the image that is determined in real time. This can improve accuracy of 3D key point detection.

The following specifically describes a method for determining a person perspective deformation degree variation between two adj acent frames of images according to an embodiment of this application.

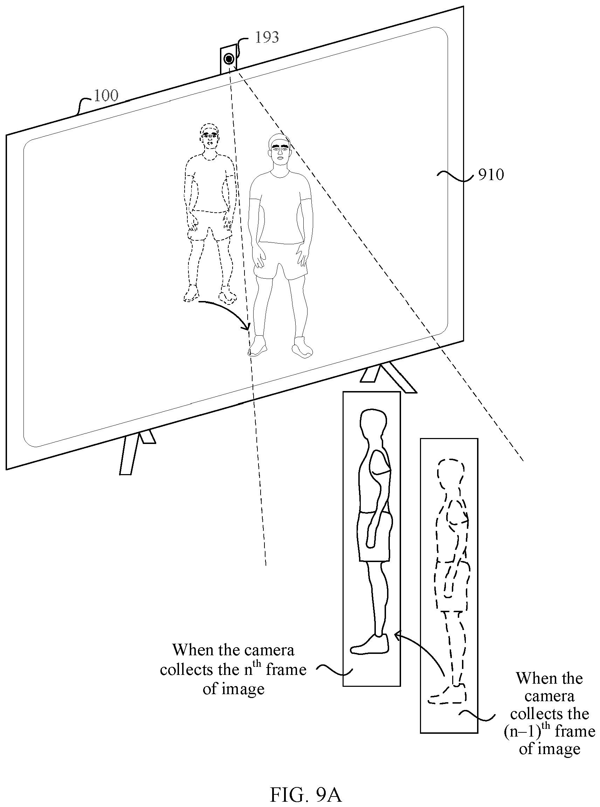

FIG. 9A is a schematic diagram of an example of a scenario in which a user is in a movement process. As shown in FIG. 9A, the electronic device 100 may collect an image by using the camera 193, and display the image on a user interface 910. In a time period from a moment at which the camera 193 collects the (n-1)th frame of image to a moment at which the camera 193 collects the nth frame of image, the user moves towards a direction in which the camera 193 is located. In other words, a distance between the user and the camera 193 is reduced. Herein, n is an integer greater than 1. A location of the user changes in the (n-1)th frame of image and the nth frame of image.

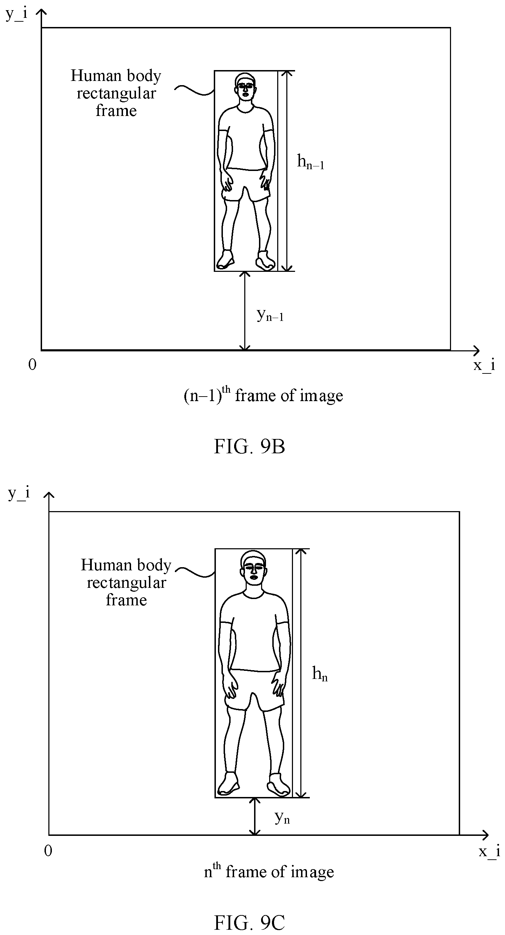

FIG. 9B and FIG. 9C show examples of the (n-1)th frame of image and the nth frame of image that are collected by the camera 193.

The electronic device 100 may perform human body detection on an image, to determine a human body rectangular frame of the user in the image. The human body rectangular frame may be used to determine a location of the user in the image. A height and a width of the human body rectangular frame respectively match a height and a width of the user in the image. The electronic device 100 may determine a height of a human body rectangular frame in each frame of image in an image coordinate system (that is, the 2D coordinate system $x\_i$-$y\_i$ in the foregoing embodiment) and a distance between a lower edge and an $x\_i$ axis.

As shown in FIG. 9B, in the $(n-1)^{th}$ frame of image, the distance between the lower edge of the human body rectangular frame and the $x\_i$ axis is $y_{n-1}$, and the height of the human body rectangular frame is $h_{n-1}$.

As shown in FIG. 9C, in the $n^{th}$ frame of image, the distance between the lower edge of the human body rectangular frame and the $x\_i$ axis is $y_n$, and the height of the human body rectangular frame is $h_n$ .

Between two adjacent frames of images, a variation $\Delta y$ of the distance between the lower edge of the human body rectangular frame and the $x\_i$ axis may reflect a variation of a relative location between the user and the camera. Herein, $\Delta y$ is a difference obtained by subtracting a distance between a lower edge of a human body rectangular frame in a current frame of image and the $x\_i$ axis from a distance between a lower edge of a human body rectangular frame in a next frame of image and the $x\_i$ axis. If the user approaches the camera, the distance between the lower edge of the human body rectangular frame and the $x\_i$ axis decreases, and a degree of person perspective deformation in the image increases. The compensation angle $\alpha$ shown in FIG. 4B may represent the degree of person perspective deformation in the image. In other words, a smaller distance between a lower edge of a human body rectangular frame in a frame of image and the $x\_i$ axis indicates a larger compensation angle $\alpha$ for correcting location information of a group of 3D key points determined based on the frame of image, and a larger absolute value of $\Delta y$ indicates a larger absolute value of $\Delta\alpha$. Herein, $\Delta\alpha$ is a difference obtained by subtracting a current compensation angle from a next compensation angle. The current compensation angle is used to correct location information of a group of 3D key points determined based on a current frame of image in the two adjacent frames of images. The next compensation angle is used to correct location information of a group of 3D key points determined based on a next frame of image in the two adjacent frames of images.

If $\Delta y<0$, $\Delta\alpha > 0$. In other words, if the user approaches the camera, the degree of person perspective deformation in the image becomes larger, and the next compensation angle is greater than the current compensation angle. If $\Delta y>0$, $\Delta\alpha < 0$ . In other words, if the user is away from the camera, the degree of person perspective deformation in the image becomes smaller, and the next compensation angle is less than the current compensation angle.

Between two adjacent frames of images, a variation $\Delta h$ of the height of the human body rectangular frame may reflect a variation of the user height in the image. Herein, $\Delta h$ is a difference obtained by subtracting a height of a human body rectangular frame in a current frame of image from a height of a human body rectangular frame in a next frame of image. A smaller height of the human body rectangular frame indicates a larger degree of person perspective deformation in the image. In other words, a smaller height of a human body rectangular frame in a frame of image indicates a larger compensation angle $\alpha$ for correcting location information of a group of 3D key points determined based on the frame of image, and a larger absolute value of $\Delta h$ indicates a larger absolute value of $\Delta\alpha$.

If $\Delta h<0$, $\Delta\alpha > 0$ . In other words, if the user height in the image becomes smaller, the degree of person perspective deformation in the image becomes larger, and the next compensation angle is greater than the current compensation angle. If $\Delta h>0$ , $\Delta\alpha < 0$ . In other words, if the user height in the image becomes larger, the degree of person perspective deformation in the image becomes smaller, and the next compensation angle is less than the current compensation angle.

Between two adjacent frames of images, a size of a height h of a human body rectangular frame in a next frame of image may affect a person perspective deformation degree variation between the two adjacent frames of images. It may be understood that a smaller user height in the image indicates a larger degree of user perspective deformation in the image. When $\Delta h$ between two adjacent frames of images does not change, a smaller user height in the two adjacent frames of images indicates a larger person perspective deformation degree variation between the two adjacent frames of images. In other words, compared with a change of a user height in an image in a range with a relatively large value, when the user height in the image changes in a range with a relatively small value, a variation of a degree of person perspective deformation in the image becomes larger.

A smaller h indicates a larger absolute value of $\Delta\alpha$.

Not limited to using the human body rectangular frame to determine the change of the relative location between the user and the camera and the change of the user height in the image collected by the camera, the electronic device 100 may further use another method to determine the change of the relative location between the user and the camera and the change of the user height in the image collected by the camera.

The electronic device 100 may store a compensation angle determining model. An input of the compensation angle determining model may include $\Delta y$ and $\Delta h$ between two adjacent frames of images and a height h of a human body rectangular frame in a next frame of image, and an output may be $\Delta\alpha$ between the two adjacent frames of images.

The compensation angle determining model may be, for example, a linear model, a nonlinear model, or a neural network model. A type of the compensation angle determining model is not limited in this embodiment of this application.

The compensation angle determining model may be obtained by using a plurality of groups of training samples. The plurality of groups of training samples may be determined by using an image collected by the camera when the user is in a leg upright posture. One group of training samples may include $\Delta y$ and $\Delta h$ between two adjacent frames of images, a height h of a human body rectangular frame in a next frame of image, and $\Delta\alpha$. In addition, $\Delta\alpha$ in the group of training samples may be a difference obtained by subtracting a current compensation angle from a next compensation angle. The current compensation angle is used to correct location information of a group of 3D key points determined based on a current frame of image in the two adjacent frames of images. The next compensation angle is used to correct location information of a group of 3D key points determined based on a next frame of image in the two adjacent frames of images. The current compensation angle and the next compensation angle are obtained through calculation by using the method in the embodiment shown in FIG. 7A.

A method for training the compensation angle determining model is not limited in this embodiment of this application. For details, refer to a method for training a model such as a linear model or a neural network model in the conventional technology.

In some embodiments, the electronic device 100 may determine $\Delta y'$ and $\Delta h'$ between a frame of image whose collection time is earlier and a frame of image whose collection time is later and a height of a human body rectangular frame in the frame of image whose collection time is later. In addition, $\Delta y'$, $\Delta h'$, and the height of the human body rectangular frame in the frame of image whose collection time is later are input into the compensation angle determining model, and the electronic device 100 may obtain a compensation angle variation between the frame of image whose collection time is earlier and the frame of image whose collection time is later. In other words, not limited to determining the compensation angle variation between the two adjacent frames of images, the electronic device 100 may further determine a compensation angle variation between two adjacent frames of images that are separated by a plurality of frames of images.

In some embodiments, the electronic device 100 may identify a group of 2D key points from a frame of image, and estimate, based on the group of 2D key points, a group of 3D key points corresponding to the frame of image. In other words, each frame of image may correspond to a group of 3D key points. The electronic device 100 may determine a person perspective deformation degree variation between the two adjacent frames of images according to the method in the foregoing embodiment. In other words, for each frame of image, the electronic device 100 may determine one compensation angle. The electronic device 100 may correct, by using the compensation angle corresponding to the frame of image, location information of a group of 3D key points corresponding to the frame of image.

In some embodiments, the electronic device 100 may identify a plurality of groups of 2D key points from a plurality of consecutive frames of images, and estimate, based on the plurality of groups of 2D key points, a group of 3D key points corresponding to the plurality of frames of images. For example, the electronic device 100 may determine a group of 3D key points by using k consecutive frames of images. Herein, k is an integer greater than 1. The electronic device 100 may determine, based on a person perspective deformation degree variation between the first k frames of images and the last k frames of images, a compensation angle corresponding to the last k frames of images. In other words, for every k consecutive frames of images, the electronic device 100 may determine one compensation angle. The electronic device 100 may correct, by using the compensation angle corresponding to the k consecutive frames of images, location information of a group of 3D key points corresponding to the k consecutive frames of images.

When determining the person perspective deformation degree variation between the first k frames of images and the last k frames of images, the electronic device 100 may select one frame of image from the first k frames of images and one frame of image from the last k frames of images. The electronic device 100 may calculate a variation of a distance between a lower edge of a human body rectangular frame and the $x\_i$ axis between the two selected frames of images, and a variation of a height of the human body rectangular frame. Based on the compensation angle determining model, the electronic device 100 may determine the person perspective deformation degree variation between the first k frames of images and the last k frames of images.

In some embodiments, after determining, according to the compensation angle variation accumulation method in the foregoing embodiment, one compensation angle corresponding to one group of 3D key points, the electronic device 100 may perform smoothing processing on the compensation angle, and correct location information of the group of 3D key points by using a compensation angle obtained after the smoothing processing. Specifically, the electronic device 100 may obtain a plurality of compensation angles corresponding to a plurality of groups of 3D key points before the group of 3D key points. The electronic device 100 may calculate a weighted average value of the compensation angle corresponding to the group of 3D key points and the plurality of compensation angles corresponding to the plurality of groups of 3D key points before the group of 3D key points. If a time of determining a 3D key point is closer to a time of determining the group of 3D key points, a weight occupied by a compensation angle corresponding to the 3D key point may be larger. A value of a weight occupied by each compensation angle when the weighted average value is calculated is not specifically limited in this embodiment of this application. The foregoing weighted average value is a compensation angle obtained after smoothing processing.

Between adjacent images collected by the camera, in each frame of image, a distance between a lower edge of a human body rectangular frame and the x_i axis and a height of the human body rectangular frame change continuously. The electronic device 100 performs the foregoing smoothing processing on the compensation angle, so that a sudden change of the compensation angle obtained through calculation can be reduced, and accuracy of 3D key point detection can be improved.

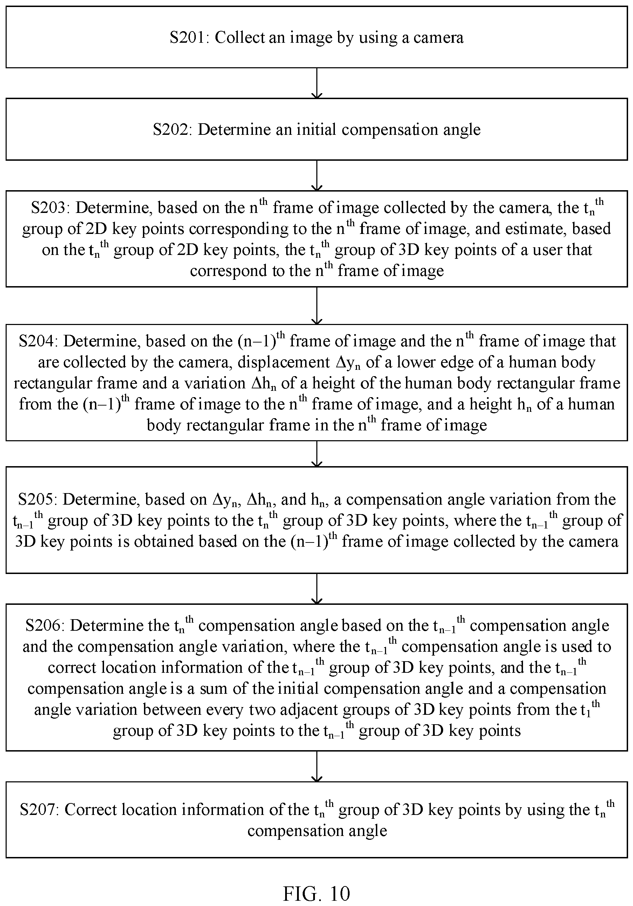

FIG. 10 is a flowchart of an example of another human body key point detection method according to an embodiment of this application.

Herein, an example in which an electronic device 100 determines a group of 3D key points by using each frame of image is specifically used for description. As shown in FIG. 10, the method may include steps S201 to S207.

S201: The electronic device 100 may collect an image by using a camera.

For step S201, refer to step S101 in the method shown in FIG. 8.

S202: The electronic device 100 may determine an initial compensation angle.

For a method for determining the initial compensation angle, refer to the descriptions in the embodiment shown in FIG. 6C. Details are not described herein again.

S203: The electronic device 100 may determine, based on the $n^{th}$ frame of image collected by the camera, a $t_n^{th}$ group of 2D key points corresponding to the $n^{th}$ frame of image, and estimate, based on the $t_n^{th}$ group of 2D key points, the $t_n^{th}$ group of 3D key points of a user that correspond the $n^{th}$ frame of image.

S204: The electronic device 100 may determine, based on the $(n-1)^{th}$ frame of image and the $n^{th}$ frame of image that are collected by the camera, displacement $\Delta y_n$ of a lower edge of a human body rectangular frame and a variation $\Delta h_n$ of a height of the human body rectangular frame from the $(n-1)^{th}$ frame of image to the $n^{th}$ frame of image, and a height $h_n$ of a human body rectangular frame in the $n^{th}$ frame of image.

Herein, n is an integer greater than 1. The $(n-1)^{th}$ frame of image and the $n^{th}$ frame of image are any two adjacent frames of images in images collected by the camera.

The electronic device 100 may perform 2D key point detection on the $1^{st}$ frame of image collected by the camera, to determine the $t_1^{th}$ group of 2D key points corresponding to the $1^{st}$ frame of image. The electronic device 100 may estimate, based on the $t_1^{th}$ group of 2D key points, the $t_1^{th}$ group of 3D key points of the user that correspond the $t_1^{th}$ frame of image. The electronic device 100 may correct location information of the $t_1^{th}$ group of 3D key points by using the initial compensation angle.

The displacement $\Delta y_n$ of the lower edge of the human body rectangular frame is a variation of a distance between the lower edge of the human body rectangular frame and an x_i axis between the $(n-1)^{th}$ frame of image and the $n^{th}$ frame of image.

For a method in which the electronic device 100 determines $\Delta y_n$ and $\Delta h_n$, refer to the descriptions of the embodiments shown in FIG. 9B and FIG. 9C. Details are not described herein again.

S205: The electronic device 100 may determine a compensation angle variation from the $t_{n-1}^{th}$ group of 3D key points to the $t_n^{th}$ group of 3D key points based on $\Delta y_n$, $\Delta h_n$, and $h_n$, where the $t_{n-1}^{th}$ group of 3D key points is obtained based on the $(n-1)^{th}$ frame of image collected by the camera.

The electronic device 100 may determine the compensation angle variation $\Delta\alpha_n$ from the $t_{n-1}^{th}$ group of 3D key points to the $t_n^{th}$ group of 3D key points by using a compensation angle determining model. Herein, $\Delta\alpha_n$ may reflect a person perspective deformation degree variation between the $(n-1)^{th}$ frame of image and the $n^{th}$ frame of image.

For a method in which the electronic device 100 obtains the compensation angle determining model, refer to the foregoing embodiment.

The electronic device 100 may perform 2D key point detection on the $(n-1)^{th}$ frame of image collected by the camera, to determine the $t_{n-1}^{th}$ group of 2D key points corresponding to the $(n-1)^{th}$ frame of image. The electronic device 100 may estimate, based on the $t_{n-1}^{th}$ group of 2D key points, the $t_{n-1}^{th}$ group of 3D key points of the user that correspond the $(n-1)^{th}$ frame of image.

S206: The electronic device 100 may determine the $t_n^{th}$ compensation angle based on the $t_{n-1}^{th}$ compensation angle and the compensation angle variation, where the $t_{n-1}^{th}$ compensation angle is used to correct location information of the $t_{n-1}^{th}$ group of 3D key points, and the $t_{n-1}^{th}$ compensation angle is a sum of the initial compensation angle and a compensation angle variation between every two adjacent groups of 3D key points from the $t_1^{th}$ group of 3D key points to the $t_{n-1}^{th}$ group of 3D key points.

The electronic device 100 may determine the $t_n^{th}$ compensation angle according to Formula (2):

$$\alpha_n = \alpha_{n-1} + \Delta\alpha_n \quad (2)$$

Herein, $\alpha_n$ is the $t_n^{th}$ compensation angle; $\alpha_{n-1}$

is the $t_{n-1}^{th}$ compensation angle; $\alpha_{n-1} = \alpha_1 + \sum_{i=2}^{n-1} \Delta\alpha_i$ ;

$\alpha_1$ is the foregoing initial compensation angle; $\sum_{i=2}^{n-1} \Delta\alpha_i$

is the compensation angle variation between every two adjacent groups of 3D key points from the $t_1^{th}$ group of 3D key points to the $t_{n-1}^{th}$ group of 3D key points; and

$$\sum_{i=2}^{n-1} \Delta\alpha_i$$

may reflect a person perspective deformation degree variation in all two adjacent frames of images between the 1st frame of image and the $(n-1)$th frame of image.

In some embodiments, the electronic device 100 may determine a compensation angle variation between a current group of 3D key points and a next group of 3D key points. There may be one or more groups of 3D key points between the current group of 3D key points and the next group of 3D key points. The compensation angle variation may be determined based on a distance between the user and the camera and a user height that exist when a current frame of image is collected, and a distance between the user and the camera and a user height that exist when a next frame of image is collected. Key points of the user in the current frame of image are a current group of 3D key points. Key points of the user in the next frame of image are a next group of 3D key points. The electronic device 100 may determine a compensation angle of the next group of 3D key points based on a compensation angle of the current group of 3D key points and the compensation angle variation. In other words, $\alpha_n = \alpha_{n-c} + \Delta\alpha'_n$. Herein, $\alpha_{n-c}$ may be a sum of a compensation angle variation from the $t_1$ th group of 3D key points to the $t_{n-c}$ th group of key points and a compensation angle of the $t_1$ th group of 3D key points; and $\Delta\alpha'_n$ is the compensation angle variation between the current group of 3D key points and the next group of 3D key points.

S207: The electronic device 100 may correct location information of the $t_n$ th group of 3D key points by using the $t_n$ th compensation angle.

It can be learned from the method shown in FIG. 10 that, even if the user does not keep a leg upright posture, the electronic device 100 may still determine a degree of person perspective deformation in an image in real time, and correct location information of 3D key points determined based on 2D key points. The electronic device 100 may determine a compensation angle corresponding to each group of 3D key points. The compensation angle corresponding to each group of 3D key points may change with a change of a relative location between the user and the camera and a change of a user action. One compensation angle corresponding to one group of 3D key points may reflect a degree of person perspective deformation in an image used to determine the group of 3D key points. The compensation angle corresponding to the group of 3D key points is used to correct location information of the group of 3D key points, so that accuracy of 3D key point detection can be improved.

In the method shown in FIG. 10, there may be a specific error in the compensation angle variation determined by the electronic device 100 by using the compensation angle determining model. When determining the $t_n$ th compensation angle, the electronic device 100 accumulates a compensation angle variation between every two adjacent groups of 3D key points from the $t_1$ th group of 3D key points to the $t_n$ th group of 3D key points based on the foregoing initial compensation angle. In this case, compensation angle variation errors are also accumulated. A larger value of $t_n$ indicates a larger error in the $t_n$ th compensation angle determined by the electronic device 100. This reduces accuracy of 3D key point detection.

In some embodiments, according to the method shown in FIG. 10, the electronic device 100 may regularly or irregularly detect whether the user is in the leg upright posture. When detecting that the user is in the leg upright posture, the electronic device 100 may calculate an included angle between an image plane and a straight line on which leg 3D key points in a group of 3D key points determined based on 2D key points are located. If the included angle is less than a preset included angle, the electronic device 100 may determine the included angle as a compensation angle corresponding to the group of 3D key points, and correct location information of the group of 3D key points by using the compensation angle. Further, according to the method shown in FIG. 10, the electronic device 100 may determine a compensation angle variation based on the compensation angle corresponding to the group of 3D key points, to determine a compensation angle corresponding to each group of 3D key points subsequently.

If the electronic device 100 detects again that the user is in the leg upright posture, the electronic device 100 may determine, based on an included angle between the image plane and a straight line on which leg 3D key points in a group of 3D key points determined based on 2D key points when the user is in the leg upright posture this time, a compensation angle corresponding to each group of 3D key points subsequently.

In this way, the electronic device 100 can reduce an error accumulated when a compensation angle is determined through compensation angle variation accumulation. Compared with the method shown in FIG. 10, the foregoing embodiment can further reduce an error in calculating a degree of person perspective deformation in an image, and improve accuracy of 3D key point detection.

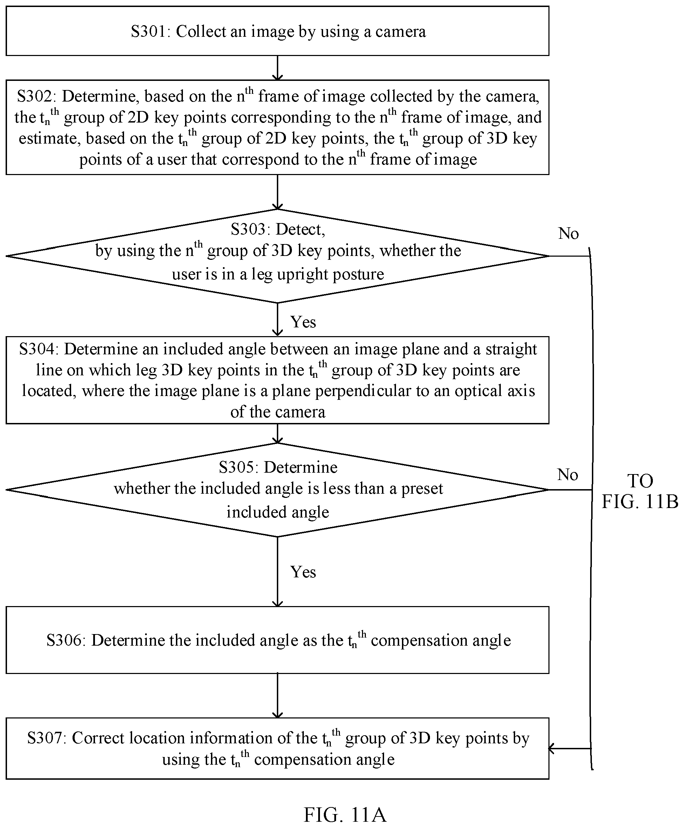

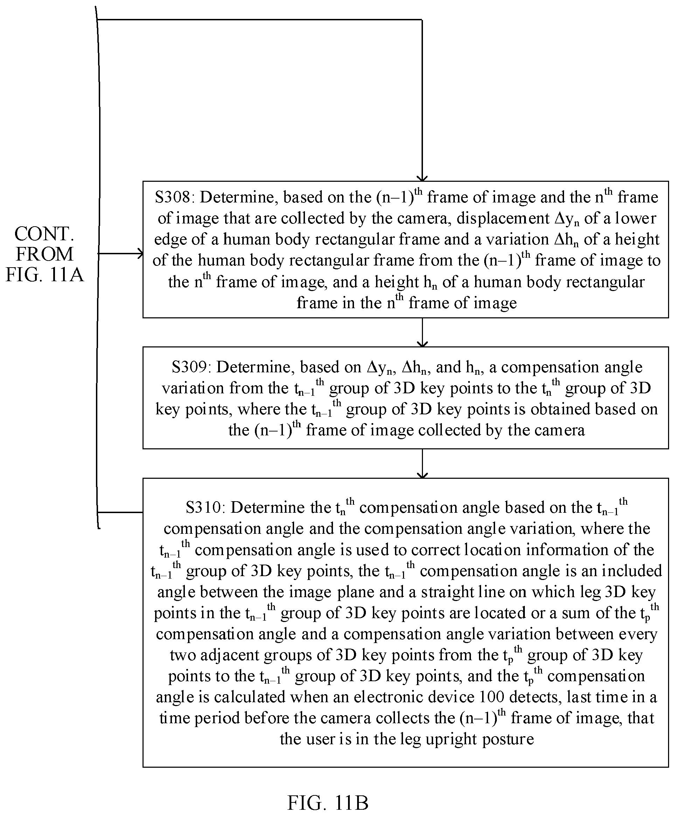

FIG. 11A and FIG. 11B are a flowchart of an example of another human body key point detection method according to an embodiment of this application.

Herein, an example in which an electronic device 100 determines a group of 3D key points by using each frame of image is specifically used for description. As shown in FIG. 11A and FIG. 11B, the method may include steps S301 to S310.

S301: The electronic device 100 may collect an image by using a camera.

S302: The electronic device 100 may determine, based on the $n^{th}$ frame of image collected by the camera, a $t_n^{th}$ group of 2D key points corresponding to the $n^{th}$ frame of image, and estimate, based on the $t_n^{th}$ group of 2D key points, the $t_n^{th}$ group of 3D key points of a user that correspond the $n^{th}$ frame of image.

S303: The electronic device 100 may detect, by using the $t_n^{th}$ group of 3D key points, whether the user is in a leg upright posture.

S304: If the electronic device 100 detects that the user is in the leg upright posture, the electronic device 100 may determine an included angle between an image plane and a straight line on which leg 3D key points in the $t_n^{th}$ group of 3D key points are located, where the image plane is a plane perpendicular to an optical axis of the camera.

S305: The electronic device 100 may determine whether the included angle is less than a preset included angle.

For steps S301 to S305, refer to steps S101 to S106 in the method shown in FIG. 8. Details are not described herein again.

S306: If the included angle is less than the preset included angle, the electronic device 100 may determine the included angle as the $t_n^{th}$ compensation angle.

S307: The electronic device 100 may correct location information of the $t_n^{th}$ group of 3D key points by using the $t_n^{th}$ compensation angle.

In steps S301 to S307, when detecting that the user is in the leg upright posture, the electronic device 100 may calculate an included angle between the image plane and a straight line on which leg 3D key points in 3D key points determined based on 2D key points are located. The electronic device 100 may use the included angle as a compensation angle, and correct, by using the compensation angle, the location information of the 3D key points that are determined based on the 2D key points when the user is in the leg upright posture this time. In other words, if the electronic device 100 detects that the user is in the leg upright posture, the electronic device 100 may not use an initial compensation angle or a compensation angle determined when the electronic device 100 detects last time that the user is in the leg upright posture as a basis to determine a compensation angle corresponding to the 3D key points.

S308: If the electronic device 100 detects, in step S303, that the user is not in the leg upright posture, or if the electronic device 100 determines, in step S305, that the included angle is greater than or equal to the preset included angle, the electronic device 100 may determine, based on the $(n-1)^{th}$ frame of image and the $n^{th}$ frame of image that are collected by the camera, displacement $\Delta y_n$ of a lower edge of a human body rectangular frame and a variation $\Delta h_n$ of a height of the human body rectangular frame from the $(n-1)^{th}$ frame of image to the $n^{th}$ frame of image, and a height $h_n$ of a human body rectangular frame in the $n^{th}$ frame of image.

S309: The electronic device 100 may determine a compensation angle variation from the $t_{n-1}^{th}$ group of 3D key points to the $t_n^{th}$ group of 3D key points based on $\Delta y_n$, $\Delta h_n$, and $h_n$, where the $t_{n-1}^{th}$ group of 3D key points is obtained based on the $(n-1)^{th}$ frame of image collected by the camera.

For step S308 and step S309, respectively refer to step S204 and step S205 in the method shown in FIG. 10. Details are not described herein again.

S310: The electronic device 100 may determine the $t_n^{th}$ compensation angle based on the $t_{n-1}^{th}$ compensation angle and the foregoing compensation angle variation, where the $t_{n-1}^{th}$ compensation angle is used to correct location information of the $t_{n-1}^{th}$ group of 3D key points, the $t_{n-1}^{th}$ compensation angle is an included angle between the image plane and a straight line on which leg 3D key points in the $t_{n-1}^{th}$ group of 3D key points are located or a sum of the $t_p^{th}$ compensation angle and a compensation angle variation between every two adjacent groups of 3D key points from the $t_p^{th}$ group of 3D key points to the $t_{n-1}^{th}$ group of 3D key points, and the $t_p^{th}$ compensation angle is calculated when the electronic device 100 detects, last time in a time period before the camera collects the $(n-1)^{th}$ frame of image, that the user is in the leg upright posture.

The electronic device 100 may determine $\alpha_n = \alpha_{n-1} + \Delta\alpha_n$ according to Formula (2). Herein, $\alpha_n$ is the $t_n^{th}$ compensation angle, and $\alpha_{n-1}$ is the $t_{n-1}^{th}$ compensation angle. A method for calculating $\alpha_{n-1}$ is different from the method shown in FIG. 10.

Specifically, if the electronic device 100 detects, by using the $t_{n-1}^{th}$ group of 3D key points, that the user is in the leg upright posture, and the included angle between the image plane and the straight line on which the leg 3D key points in the $t_{n-1}^{th}$ group of 3D key points are located is less than the preset included angle, the $t_{n-1}^{th}$ compensation angle $\alpha_{n-1}$ may be the included angle between the image plane and the straight line on which the leg 3D key points in the $t_{n-1}^{th}$ group of 3D key points are located.

$$\alpha_{n-1} = \alpha_p + \sum_{i=p+1}^{n-1} \Delta\alpha_i$$

Alternatively, . Herein, p is a positive integer less than n-1. In other words, the $p^{th}$ frame of image is an image collected by the camera before the camera collects the $(n-1)^{th}$ frame of image. Herein, $\alpha_p$ is the $t_p^{th}$ compensation angle, $\alpha_p$ may be used to correct location information of the $t_p^{th}$ group of 3D key points, and $\alpha_p$ is calculated by the electronic device 100 when the electronic device 100 detects, last time in the time period before the camera collects the $(n-1)^{th}$ frame of image, that the user is in the leg upright posture. In other words, $\alpha_p$ indicates that an included angle between the image plane and a straight line on which leg 3D key points in the $t_p^{th}$ group of 3D key points are located is less than the preset included angle, $\sum_{i=p+1}^{n-1} \Delta\alpha_i$ is the com-

pensation angle variation between every two adjacent groups of 3D key points n-1 from the $t_p$ th group of 3D key points to the $t_{n-1}$ th group of 3D key points, and

$$\sum_{i=p+1}^{n-1} \Delta \alpha_i$$

may reflect a person perspective deformation degree variation between every two adjacent frames of images from the $p^{th}$ frame of image to the $(n-1)^{th}$ frame of image.

When the electronic device 100 has determined the $t_n$ th compensation angle $\alpha_n$, the electronic device 100 may perform step S307, that is, correct the location information of the $t_n$ th group of 3D key points by using $\alpha_n$.

In some embodiments, the electronic device 100 may determine a compensation angle variation between a current group of 3D key points and a next group of 3D key points. There may be one or more groups of 3D key points between the current group of 3D key points and the next group of 3D key points. The compensation angle variation may be determined based on a distance between the user and the camera and a user height that exist when a current frame of image is collected, and a distance between the user and the camera and a user height that exist when a next frame of image is collected. Key points of the user in the current frame of image are a current group of 3D key points. Key points of the user in the next frame of image are a next group of 3D key points. The electronic device 100 may determine a compensation angle of the next group of 3D key points based on a compensation angle of the current group of 3D key points and the compensation angle variation.

Optionally, the current frame of image may be collected when the electronic device 100 detects that the user is in the leg upright posture. For example, the current frame of image may be collected when the electronic device 100 detects, last time before a time of collecting the next frame of image, that the user is in the leg upright posture.

In the method shown in FIG. 11A and FIG. 11B, the electronic device 100 may not detect, for each group of 3D key points, whether the user is in the leg upright posture. Optionally, the electronic device 100 may regularly or irregularly detect whether the user is in the leg upright posture. Alternatively, when a fitness course is played until the user is indicated to complete a leg upright action, the electronic device 100 may detect whether the user is in the leg upright posture. When the fitness course is played until the user is indicated to complete the leg upright action, the electronic device 100 may determine 3D key points of the user by using a currently collected image. The electronic device 100 may determine the compensation angle according to steps S308 to S310 in FIG. 11A and FIG. 11B, and correct the foregoing 3D key points by using the compensation angle.

It can be learned from the method shown in FIG. 11A and FIG. 11B that, when detecting that the user is in the leg upright posture, the electronic device 100 may directly determine the compensation angle according to the method shown in FIG. 8. Otherwise, the electronic device 100 may determine the compensation angle according to the method shown in FIG. 10 based on the initial compensation angle or the compensation angle determined when the electronic device 100 detects last time that the user is in the leg upright posture. This can reduce an error accumulated when a compensation angle is determined through compensation angle variation accumulation. Compared with the methods shown in FIG. 8 and FIG. 10, the foregoing embodiment can further reduce an error in calculating a degree of person perspective deformation in an image, and improve accuracy of 3D key point detection.

Not limited to the method for determining the compensation angle when it is detected that the user is in the leg upright posture in the foregoing embodiment, the electronic device 100 may further determine the compensation angle when detecting that a user posture matches a preset posture. The preset posture may be an upper body upright posture and/or a leg upright posture. In other words, detecting whether the user is in the leg upright posture is an implementation of detecting whether the user posture matches the preset posture.

If the electronic device 100 detects that the user is in the upper body upright posture, the electronic device 100 may determine an included angle between the image plane and a straight line on which upper body 3D key points are located as a compensation angle, and correct the 3D key points by using the compensation angle.

If the electronic device 100 detects that the user is in the upper body upright posture and the leg upright posture, the electronic device 100 may determine an included angle between the image plane and a straight line on which upper body 3D key points and/or leg 3D key points are located as a compensation angle, and correct the 3D key points by using the compensation angle.

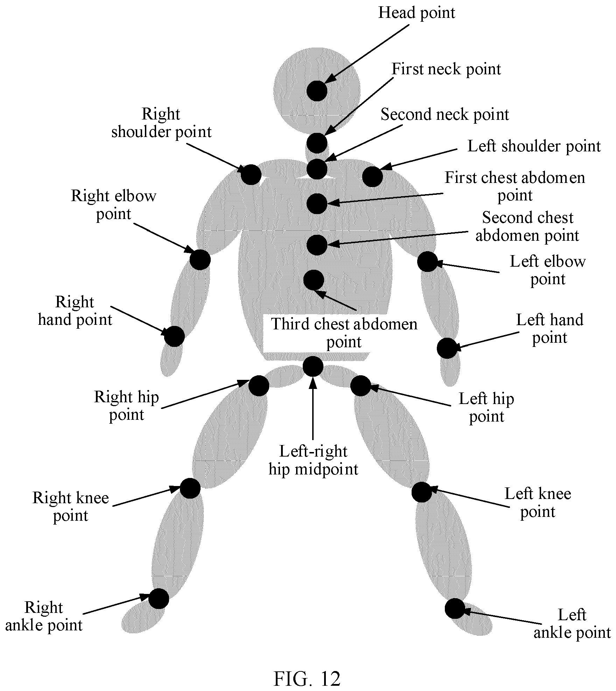

FIG. 12 is a diagram of an example of another human body key point location distribution. As shown in FIG. 12, human body key points may include a head point, a first neck point, a second neck point, a left shoulder point, a right shoulder point, a right elbow point, a left elbow point, a right hand point, a left hand point, a first chest abdomen point, a second chest abdomen point, a third chest abdomen point, a right hip point, a left hip point, a left-right hip midpoint, a right knee point, a left knee point, a right ankle point, and a left ankle point. Not limited to the foregoing key points, other key points may be further included in this embodiment of this application. This is not specifically limited herein.

Compared with the key points shown in FIG. 1, the electronic device 100 may identify more human body key points. The electronic device 100 may identify location information of each key point shown in FIG. 12 on a 2D plane and location information of each key point in 3D space based on an image collected by a camera, to determine a 2D key point and a 3D key point corresponding to each key point shown in FIG. 12.

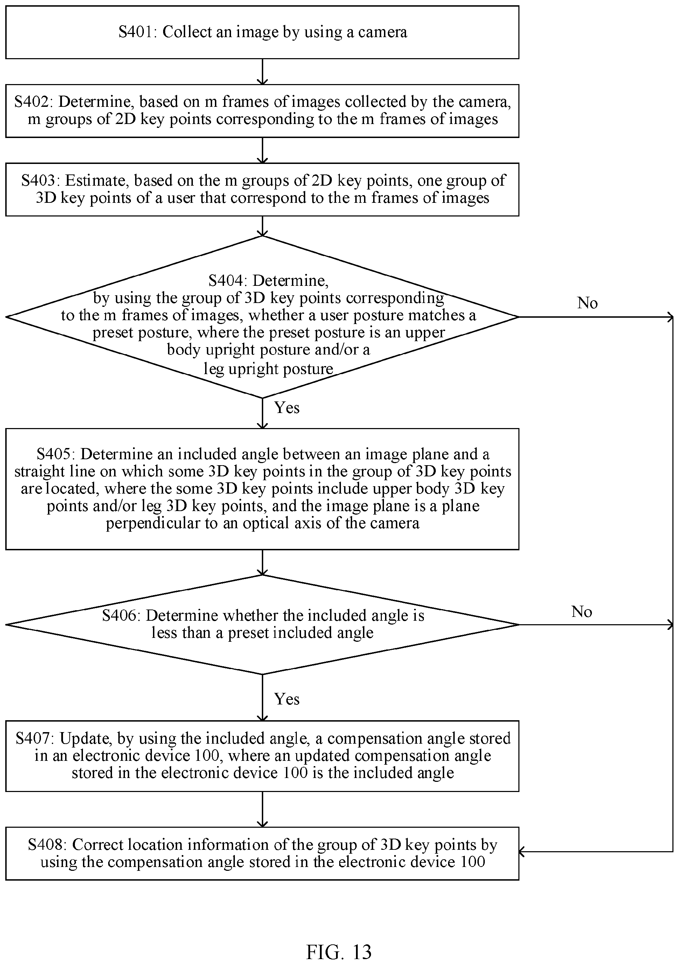

FIG. 13 is a flowchart of an example of another human body key point detection method according to an embodiment of this application.

As shown in FIG. 13, the method may include steps S401 to S408.

S401: An electronic device 100 may collect an image by using a camera.

S402: The electronic device 100 may determine, based on m frames of images collected by the camera, m groups of 2D key points corresponding to the m frames of images.

S403: The electronic device 100 may estimate, based on the m groups of 2D key points, one group of 3D key points of a user that correspond to the m frames of images.

For steps S401 to S403, refer to steps S101 to S103 in FIG. 8. Details are not described herein again.

S404: The electronic device 100 may determine, by using the group of 3D key points corresponding to the m frames of images, whether a user posture matches a preset posture, where the preset posture is an upper body upright posture and/or a leg upright posture.

In some embodiments, the m frames of images may be any m frames of images collected by the camera. In other words, the electronic device 100 may determine whether a user posture determined based on each group of 3D key points matches the preset posture. If the user posture matches the preset posture, the electronic device 100 may perform step S405. If the user posture does not match the preset posture, the electronic device 100 may perform step S408.

In some embodiments, the preset posture may be a posture included in a fitness course or a somatic game. The electronic device 100 may obtain an action that the fitness course or the somatic game indicates the user to complete. The electronic device 100 may store a moment at which the preset posture is played in the fitness course or the somatic game and 3D key points corresponding to the preset posture. At the moment at which the fitness course or the somatic game is played to the preset posture, the electronic device 100 may compare the group of 3D key points corresponding to the m frames of images with the 3D key points corresponding to the preset posture. If the user posture indicated by the group of 3D key points corresponding to the m frames of images matches the preset posture, the electronic device 100 may perform step S405. The m frames of images are collected by the camera at the moment at which the fitness course or the somatic game is played to the preset posture.

Optionally, the electronic device 100 may store a moment at which the preset posture is played in the fitness course or the somatic game. At the moment at which the fitness course or the somatic game is played to the preset posture, the electronic device 100 may obtain 3D key points corresponding to the preset posture. Further, the electronic device 100 may compare the group of 3D key points corresponding to the m frames of images with the 3D key points corresponding to the preset posture.

In some embodiments, the m frames of images are collected by the camera at a moment other than the moment at which the fitness course or the somatic game is played to the preset posture. The electronic device 100 may correct, by using a compensation angle determined when a latest fitness course or a latest somatic game is played to the preset posture, the 3D key points determined based on the m frames of images. In other words, the electronic device 100 may not determine whether a user posture determined based on each group of 3D key points matches the preset posture. This can reduce computing resources of the electronic device 100.

Not limited to the posture included in the fitness course or the somatic game, the preset posture may be a posture included in an action library of another application. The action library may store information indicating the user to complete each action (for example, image information of the action and audio information of the action).

In some embodiments, in a time period before the fitness course or the somatic game starts to be played, or in a process of playing the fitness course or the somatic game, the electronic device 100 may indicate the user to complete an action corresponding to the preset posture. In other words, the preset posture may not be included in the fitness course or the somatic game. When an application such as the fitness course or the somatic game runs, the electronic device 100 may regularly or irregularly indicate the user to complete the action corresponding to the preset posture. When indicating the user to complete the action corresponding to the preset posture, the electronic device 100 may compare the group of 3D key points corresponding to the m frames of images with the group of 3D key points corresponding to the preset posture. If the user posture indicated by the group of 3D key points corresponding to the m frames of images matches the preset posture, the electronic device 100 may perform step S405. The m frames of images are collected by the camera when the electronic device 100 indicates the user to complete the action corresponding to the preset posture.

Optionally, when determining whether the user posture matches the preset posture, the electronic device 100 may perform comparison by using some key points (for example, upper body key points or leg key points) in the group of 3D key points. For example, if the preset posture is the upper body upright posture, the electronic device 100 may compare upper body 3D key points in the group of 3D key points of the user with upper body 3D key points in the group of 3D key points corresponding to the preset posture. If location information of the two groups of upper body 3D key points is the same or a difference is less than a threshold, the electronic device 100 may determine that the user posture matches the preset posture. If the preset posture is the leg upright posture, the electronic device 100 may compare leg 3D key points in the group of 3D key points of the user with leg 3D key points in the group of 3D key points corresponding to the preset posture. If location information of the two groups of leg 3D key points is the same or a difference is less than a threshold, the electronic device 100 may determine that the user posture matches the preset posture.

S405: The electronic device 100 may determine an included angle between an image plane and a straight line on which some 3D key points in the group of 3D key points are located, where the some 3D key points include upper body 3D key points and/or leg 3D key points, and the image plane is a plane perpendicular to an optical axis of the camera.

In some embodiments, the preset posture is the upper body upright posture. That the electronic device 100 detects that the user posture matches the preset posture may indicate that, in the group of 3D key points corresponding to the m frames of images, neck points (the first neck point and the second neck point shown in FIG. 12) and chest abdomen points (the first chest abdomen point, the second chest abdomen point, and the third chest abdomen point shown in FIG. 12) are approximately on one straight line. The electronic device 100 may determine an included angle between the image plane and a straight line on which any two of the first neck point, the second neck point, the first chest abdomen point, the second chest abdomen point, and the third chest abdomen point in the group of 3D key points are located. For example, the electronic device 100 determines an included angle between the image plane and a straight line on which the first neck point and the third chest abdomen point in the group of 3D key points are located.

Optionally, when detecting that the user posture matches the preset posture, the electronic device 100 may calculate an average value of included angles between the image plane and a plurality of straight lines on which any two 3D key points of the first neck point, the second neck point, the first chest abdomen point, the second chest abdomen point, and the third chest abdomen point are located.

In some embodiments, the preset posture is the leg upright posture. The electronic device 100 may determine, according to the method in the foregoing embodiment, an included angle between the image plane and a straight line on which leg 3D key points are located. Details are not described herein.

In some embodiments, the preset posture is the upper body upright posture and the leg upright posture. That the electronic device 100 detects that the user posture matches the preset posture may indicate that, in the group of 3D key points corresponding to the m frames of images, the first neck point, the second neck point, the first chest abdomen point, the second chest abdomen point, the third chest abdomen point, the right hip point, the right knee point, the right ankle point, the left hip point, the left knee point, and the left ankle point are approximately on one plane. The electronic device 100 may determine an included angle between the image plane and a straight line on which any two of the first neck point, the second neck point, the first chest abdomen point, the second chest abdomen point, the third chest abdomen point, the right hip point (or the left hip point), the right knee point (or the left knee point), and the right ankle point (or the left ankle point) in the group of 3D key points are located. For example, the electronic device 100 determines an included angle between the image plane and a straight line on which the first neck point and the right knee point in the group of 3D key points are located.

Optionally, when detecting that the user posture matches the preset posture, the electronic device 100 may calculate an average value of included angles between the image plane and a plurality of straight lines on which any two 3D key points of the first neck point, the second neck point, the first chest abdomen point, the second chest abdomen point, the third chest abdomen point, the right hip point (or the left hip point), the right knee point (or the left knee point), and the right ankle point (or the left ankle point) are located.

S406: The electronic device 100 may determine whether the included angle is less than a preset included angle.

S407: If the included angle is less than the preset included angle, the electronic device 100 may update, by using the included angle, a compensation angle stored in the electronic device 100, where an updated compensation angle stored in the electronic device 100 is the included angle.

S408: The electronic device 100 may correct location information of the group of 3D key points by using the compensation angle stored in the electronic device 100.

For steps S406 to S408, refer to steps S106 to S108 in FIG. 8. Details are not described herein again.

A method for determining an initial compensation angle in the method flowchart shown in FIG. 10 may be the method shown in FIG. 13. In the method flowchart shown in FIG. 11A and

FIG. 11B, not limited to determining a compensation angle when the electronic device 100 detects that the user is in the leg upright posture, the electronic device 100 may further determine the compensation angle by using the method shown in FIG. 13.

It can be learned from the method shown in FIG. 13 that, when detecting that the user posture matches the preset posture, the electronic device 100 may determine a degree of person perspective deformation in the image by using the 3D key points determined based on the image. The preset posture may be an upper body upright posture and/or a leg upright posture. In other words, when the user is in the upper body upright posture and/or the leg upright posture, the electronic device 100 may determine the degree of person perspective deformation in the image by using the 3D key points determined based on the image. Further, the electronic device 100 may correct the location information of the 3D key points determined based on the image. This reduces an error caused by image perspective deformation to the location information of the 3D key points, and improves accuracy of detecting the location information of the 3D key points. In this method, only one camera is required, which not only reduces costs, but also reduces calculation complexity of key point detection.

In addition, each time it is detected that the user posture matches the preset posture, if an included angle between the image plane and a straight line on which upper body 3D key points and/or leg 3D key points are located may be used to correct the location information of the 3D key points, the electronic device 100 may update the compensation angle. An updated compensation angle can more accurately reflect a degree of person perspective deformation in the image collected by the camera at a current location of the user. This can reduce impact of a change of a location between the user and the camera on correction of location information of 3D key points, and improve accuracy of corrected location information of the 3D key points. In other words, the electronic device 100 may correct the location information of the 3D key points by using the updated compensation angle. A human body model determined based on the corrected 3D key points can more accurately reflect a user posture, thereby improving accuracy of posture detection. In this way, during fitness or somatic gaming, the electronic device 100 can more accurately determine whether a user posture is correct, whether a user action amplitude meets a requirement, and the like, so that better user experience is implemented during fitness or somatic gaming.

In this embodiment of this application, the electronic device may determine a first moment based on first multimedia information. The first moment may be a moment at which the first multimedia information indicates the user to perform an action that meets a first condition. The first multimedia information may be related content in the fitness course application or the somatic game application. The multimedia information may include content of one or more types in manners such as a video, an animation, a voice, and a text. The action that meets the first condition may be an upper body upright action and/or a leg upright action. The electronic device may determine, by comparing a 3D key point of the user with a 3D key point corresponding to the action that meets the first condition, whether the user performs the action that meets the first condition. Optionally, if the action that meets the first condition is the leg upright action, the electronic device may determine, according to the method shown in FIG. 7A, whether the user performs the action that meets the first condition.

In this embodiment of this application, the electronic device may determine a compensation angle variation based on a first model. The first model is the compensation angle determining model in the foregoing embodiment.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A human body key point detection method, wherein the method is applied to an electronic device comprising one or more cameras, and the method comprises:

    obtaining a first image of a first user by using the camera;
    determining a first group of 3D key points of the first user based on the first image;
    determining whether a plurality of 3D key points in the first group of 3D key points meet a first condition;
    if the first condition is met, determining a first compensation angle based on the plurality of 3D key points; and
    performing rotation correction on the first group of 3D key points by using the first compensation angle.

2. The method according to claim 1, wherein the method further comprises:
    if the first condition is not met, performing rotation correction on the first group of 3D key points by using a second compensation angle, wherein the second compensation angle is determined based on a second group of 3D key points, and the second group of 3D key points is a latest group of 3D key points that meet the first condition before the first image is obtained.

3. The method according to claim 1 or 2, wherein the obtaining a first image of a first user by using the camera specifically comprises:

    determining a first moment based on first multimedia information, wherein the first moment is a moment at which the first multimedia information indicates a user to perform an action that meets the first condition; and
    obtaining, by using the camera, the first image of the first user in a first time period starting from the first moment.

**4.** The method according to claim 3, wherein the method further comprises:
if 3D key points corresponding to an action that the multimedia information indicates the user to perform at a second moment do not meet the first condition, performing, by using a third compensation angle, rotation correction on 3D key points determined based on an image collected in a second time period starting from the second moment, wherein the third compensation angle is determined based on a third group of 3D key points, and the third group of 3D key points is a latest group of 3D key points that meet the first condition before the second moment.

**5.** The method according to any one of claims 1 to 4, wherein the determining whether a plurality of 3D key points in the first group of 3D key points meet a first condition specifically comprises:
determining whether the plurality of 3D key points in the first group of 3D key points match 3D key points corresponding to a first action, wherein the first action is at least one of an upper body upright action and a leg upright action.

**6.** The method according to claim 5, wherein if the first action is the upper body upright action, the first compensation angle is an included angle between an image plane and a straight line on which a neck point and a chest abdomen point in the first group of 3D key points are located.

**7.** The method according to claim 5, wherein if the first action is the leg upright action, the first compensation angle is an included angle between an image plane and a straight line on which any two of a hip point, a knee point, and an ankle point in the first group of 3D key points are located.

**8.** The method according to any one of claims 1 to 4, wherein the plurality of 3D key points in the first group of 3D key points comprise a hip point, a knee point, and an ankle point, and the determining whether a plurality of 3D key points in the first group of 3D key points meet a first condition specifically comprises:

calculating a first included angle between a straight line on which a left hip point and a left knee point in the first group of 3D key points are located and a straight line on which the left knee point and a left foot point in the first group of 3D key points are located, and a second included angle between a straight line on which a right hip point and a right knee point in the first group of 3D key points are located and a straight line on which the right knee point and a right foot point in the first group of 3D key points are located; and
by detecting whether a difference between the first included angle and 180° is less than a first difference and whether a difference between the second included angle and 180° is less than the first difference, determining whether the plurality of 3D key points in the first group of 3D key points meet the first condition.

**9.** The method according to claim 8, wherein a case in which the plurality of 3D key points in the first group of 3D key points meet the first condition comprises:
the difference between the first included angle and 180° is less than the first difference and/or the difference between the second included angle and 180° is less than the first difference.

**10.** The method according to any one of claims 2 to 9, wherein the second compensation angle is an included angle between the image plane and a straight line on which upper body 3D key points and/or leg 3D key points in the second group of 3D key points are located.

**11.** The method according to any one of claims 4 to 10, wherein the third compensation angle is an included angle between the image plane and a straight line on which upper body 3D key points and/or leg 3D key points in the third group of 3D key points are located.

**12.** The method according to any one of claims 2 to 9, wherein the second compensation angle is a sum of a first compensation angle variation and a third included angle; the third included angle is an included angle between the image plane and a straight line on which upper body 3D key points and/or leg 3D key points in the second group of 3D key points are located; the first compensation angle variation is determined based on a first height H1, a first distance Y1, a second height H2, and a second distance Y2, wherein Y1 and H1 are respectively a distance between the first user and the camera and a height of the first user that exist when the first image is collected, and Y2 and H2 are respectively a distance between the first user and the camera and a height of the first user that exist when a second image is collected; and key points of the first user in the first image are the first group of 3D key points, and key points of the first user in the second image are the second group of 3D key points; and
in a time period from a moment of collecting the second image to a moment of collecting the first image, a smaller height of the first user indicates that the second compensation angle increases more than the third angle, a smaller distance between the first user and the camera indicates that the second compensation angle increases more than the third angle, and a smaller value of H1 indicates that the second compensation angle increases more than the third angle.

13. The method according to any one of claims 4 to 9 or 12, wherein the third compensation angle is a sum of a second compensation angle variation and a fourth included angle; the fourth included angle is an included angle between the image plane and a straight line on which upper body 3D key points and/or leg 3D key points in the third group of 3D key points are located; the second compensation angle variation is determined based on a third height H3, a third distance Y3, a fourth height H4, and a fourth distance Y4, wherein Y3 and H3 are respectively a distance between the first user and the camera and a height of the first user in the second time period, and Y4 and H4 are respectively a distance between the first user and the camera and a height of the first user that exist when a third image is collected; and key points of the first user in the third image are the third group of 3D key points; and
in a time period from the moment of collecting the second image to the second time period, a smaller height of the first user indicates that the third compensation angle increases more than the fourth angle, a smaller distance between the first user and the camera indicates that the third compensation angle increases more than the fourth angle, and a smaller value of H3 indicates that the third compensation angle increases more than the fourth angle.

14. The method according to claim 13, wherein both the first compensation angle variation and the second compensation angle are determined by using a first model; the first model is obtained by training a plurality of groups of training samples; one group of training samples comprises: a variation of a lower edge of a location of a human body in an image between an image whose collection time is earlier and an image whose collection time is later, a variation of a height of the human body in the image, a height of the human body in the image whose collection time is later, and a variation of an included angle between the image plane and a straight line on which upper body 3D key points and/or leg 3D key points in two groups of 3D key points determined based on the image whose collection time is earlier and the image whose collection time is later are located; and a plurality of 3D key points in the two groups of 3D key points all meet the first condition.

15. The method according to any one of claims 2 to 14, wherein before the determining a first compensation angle based on the plurality of 3D key points, the method further comprises:

   determining that an included angle between the image plane and a straight line on which upper body 3D key points and/or leg 3D key points in the first group of 3D key points are located is less than a fifth included angle; and
if the included angle between the image plane and the straight line on which the upper body 3D key points and/or the leg 3D key points in the first group of 3D key points are located is greater than the fifth included angle, performing rotation correction on the first group of 3D key points by using the second compensation angle.

16. An electronic device, wherein the electronic device comprises a camera, a display, a memory, and a processor, wherein the camera is configured to collect an image, the memory is configured to store a computer program, and the processor is configured to invoke the computer program, so that the electronic device performs the method according to any one of claims 1 to 15.

17. A computer storage medium, comprising computer instructions, wherein when the computer instructions are run on an electronic device, the electronic device is enabled to perform the method according to any one of claims 1 to 15.

18. A computer program product, wherein when the computer program product runs on an electronic device, the electronic device is enabled to perform the method according to any one of claims 1 to 15.

FIG. 1

FIG. 2A

FIG. 2B

FIG. 3

FIG. 4A

FIG. 4B

Electronic device 100

Antenna 1                                    Antenna 2

```
┌──────────────────────────────┐      ┌──────────────────────────────┐
│  Mobile communications module│      │ Wireless communications module│
│        2G/3G/4G/5G           │      │     BT/WLAN/GNSS/NFC/IR/FM    │
│           [150]              │      │           [160]              │
└──────────────────────────────┘      └──────────────────────────────┘
```

Speaker [170A]

Receiver [170B]

Audio module [170]

Microphone [170C]

Headset jack [170D]

External memory interface [120]

Internal memory [121]

Processor [110]

Sensor module [180]

Button [190]

Motor [191]

Indicator [192]

Cameras 1 to N [193]

Displays 1 to N [194]

USB interface [130]

Charging input

Charging management module [140]

Power management module [141]

Battery [142]

FIG. 5

08:08

Fitness  611   Gallery   Music   Applications   Contacts

Mail   Cloud Share   Memo   Settings   Camera

○ ● ○

◁    ○    □

~ 61

FIG. 6A

~62

**Smart fitness** ⌒ 621

Me    **Course recommendations**    Fat burning zone   Shape zone   Dance zone

~ 622

~ 623

Full-body fat burning Primary

30 minutes

Full-body fat burning Intermediate

30 minutes

Full-body fat burning Advanced

20 minutes

FIG. 6B

36

193 100

Please stand up in the area where you are
exercising and point your face at the camera 631

632

63

FIG. 6C

FIG. 6D

FIG. 7A

FIG. 7B

S101: Collect an image by using a camera

↓

S102: Determine, based on m frames of images collected by the camera, m groups of 2D key points corresponding to the m frames of images

↓

S103: Estimate, based on the m groups of 2D key points, one group of 3D key points of a user that correspond to the m frames of images

↓

S104: Detect, by using the group of 3D key points corresponding to the m frames of images, whether the user is in a leg upright posture ———No———→

↓ Yes

S105: Determine an included angle between an image plane and a straight line on which leg 3D key points in the group of 3D key points are located, where the image plane is a plane perpendicular to an optical axis of the camera

↓

S106: Determine whether the included angle is less than a preset included angle ———No———→

↓ Yes

S107: Update, by using the included angle, a compensation angle stored in an electronic device 100, where an updated compensation angle stored in the electronic device 100 is the included angle

↓

S108: Correct location information of the group of 3D key points by using the compensation angle stored in the electronic device 100

FIG. 8

When the camera collects the $n^{th}$ frame of image

When the camera collects the $(n-1)^{th}$ frame of image

FIG. 9A

(n–1)$^{\text{th}}$ frame of image

FIG. 9B

n$^{\text{th}}$ frame of image

FIG. 9C

S201: Collect an image by using a camera

S202: Determine an initial compensation angle

S203: Determine, based on the $n^{th}$ frame of image collected by the camera, the $t_n^{th}$ group of 2D key points corresponding to the $n^{th}$ frame of image, and estimate, based on the $t_n^{th}$ group of 2D key points, the $t_n^{th}$ group of 3D key points of a user that correspond to the $n^{th}$ frame of image

S204: Determine, based on the $(n-1)^{th}$ frame of image and the $n^{th}$ frame of image that are collected by the camera, displacement $\Delta y_n$ of a lower edge of a human body rectangular frame and a variation $\Delta h_n$ of a height of the human body rectangular frame from the $(n-1)^{th}$ frame of image to the $n^{th}$ frame of image, and a height $h_n$ of a human body rectangular frame in the $n^{th}$ frame of image

S205: Determine, based on $\Delta y_n$, $\Delta h_n$, and $h_n$, a compensation angle variation from the $t_{n-1}^{th}$ group of 3D key points to the $t_n^{th}$ group of 3D key points, where the $t_{n-1}^{th}$ group of 3D key points is obtained based on the $(n-1)^{th}$ frame of image collected by the camera

S206: Determine the $t_n^{th}$ compensation angle based on the $t_{n-1}^{th}$ compensation angle and the compensation angle variation, where the $t_{n-1}^{th}$ compensation angle is used to correct location information of the $t_{n-1}^{th}$ group of 3D key points, and the $t_{n-1}^{th}$ compensation angle is a sum of the initial compensation angle and a compensation angle variation between every two adjacent groups of 3D key points from the $t_1^{th}$ group of 3D key points to the $t_{n-1}^{th}$ group of 3D key points

S207: Correct location information of the $t_n^{th}$ group of 3D key points by using the $t_n^{th}$ compensation angle

FIG. 10

S301: Collect an image by using a camera

S302: Determine, based on the $n^{th}$ frame of image collected by the camera, the $t_n{}^{th}$ group of 2D key points corresponding to the $n^{th}$ frame of image, and estimate, based on the $t_n{}^{th}$ group of 2D key points, the $t_n{}^{th}$ group of 3D key points of a user that correspond to the $n^{th}$ frame of image

S303: Detect, by using the $n^{th}$ group of 3D key points, whether the user is in a leg upright posture

No

Yes

S304: Determine an included angle between an image plane and a straight line on which leg 3D key points in the $t_n{}^{th}$ group of 3D key points are located, where the image plane is a plane perpendicular to an optical axis of the camera

S305: Determine whether the included angle is less than a preset included angle

No

TO FIG. 11B

Yes

S306: Determine the included angle as the $t_n{}^{th}$ compensation angle

S307: Correct location information of the $t_n{}^{th}$ group of 3D key points by using the $t_n{}^{th}$ compensation angle

FIG. 11A

CONT.
FROM
FIG. 11A

S308: Determine, based on the $(n-1)^{th}$ frame of image and the $n^{th}$ frame of image that are collected by the camera, displacement $\Delta y_n$ of a lower edge of a human body rectangular frame and a variation $\Delta h_n$ of a height of the human body rectangular frame from the $(n-1)^{th}$ frame of image to the $n^{th}$ frame of image, and a height $h_n$ of a human body rectangular frame in the $n^{th}$ frame of image

S309: Determine, based on $\Delta y_n$, $\Delta h_n$, and $h_n$, a compensation angle variation from the $t_{n-1}{}^{th}$ group of 3D key points to the $t_n{}^{th}$ group of 3D key points, where the $t_{n-1}{}^{th}$ group of 3D key points is obtained based on the $(n-1)^{th}$ frame of image collected by the camera

S310: Determine the $t_n{}^{th}$ compensation angle based on the $t_{n-1}{}^{th}$ compensation angle and the compensation angle variation, where the $t_{n-1}{}^{th}$ compensation angle is used to correct location information of the $t_{n-1}{}^{th}$ group of 3D key points, the $t_{n-1}{}^{th}$ compensation angle is an included angle between the image plane and a straight line on which leg 3D key points in the $t_{n-1}{}^{th}$ group of 3D key points are located or a sum of the $t_p{}^{th}$ compensation angle and a compensation angle variation between every two adjacent groups of 3D key points from the $t_p{}^{th}$ group of 3D key points to the $t_{n-1}{}^{th}$ group of 3D key points, and the $t_p{}^{th}$ compensation angle is calculated when an electronic device 100 detects, last time in a time period before the camera collects the $(n-1)^{th}$ frame of image, that the user is in the leg upright posture

FIG. 11B

FIG. 12

S401: Collect an image by using a camera

↓

S402: Determine, based on m frames of images collected by the camera, m groups of 2D key points corresponding to the m frames of images

↓

S403: Estimate, based on the m groups of 2D key points, one group of 3D key points of a user that correspond to the m frames of images

↓

S404: Determine, by using the group of 3D key points corresponding to the m frames of images, whether a user posture matches a preset posture, where the preset posture is an upper body upright posture and/or a leg upright posture

No →

Yes ↓

S405: Determine an included angle between an image plane and a straight line on which some 3D key points in the group of 3D key points are located, where the some 3D key points include upper body 3D key points and/or leg 3D key points, and the image plane is a plane perpendicular to an optical axis of the camera

↓

S406: Determine whether the included angle is less than a preset included angle

No →

Yes ↓

S407: Update, by using the included angle, a compensation angle stored in an electronic device 100, where an updated compensation angle stored in the electronic device 100 is the included angle

↓

S408: Correct location information of the group of 3D key points by using the compensation angle stored in the electronic device 100

FIG. 13

## INTERNATIONAL SEARCH REPORT

| International application No. |
| --- |
| **PCT/CN2022/083227** |

**A.    CLASSIFICATION OF SUBJECT MATTER**

G06T 7/00(2017.01)i

According to International Patent Classification (IPC) or to both national classification and IPC

**B.    FIELDS SEARCHED**

Minimum documentation searched (classification system followed by classification symbols)

G06T，G06K9/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 3维, 三维, 补偿角, 夹角, 角度, 矫正, 关键点, 特征点, "3D", 校正, 人体模型, 虚拟人, 旋转, 前倾, 后仰, 倾斜, 透视, 变形, 形变, 畸变, 平面, angle, perspective distortion, correct, adjust, revise, key point, feature point, rotate, lean, three dimension, three-dimensional

**C.    DOCUMENTS CONSIDERED TO BE RELEVANT**

| Category* | Citation of document, with indication, where appropriate, of the relevant passages | Relevant to claim No. |
| --- | --- | --- |
| X | CN 108305283 A (TSINGHUA UNIVERSITY) 20 July 2018 (2018-07-20) description, paragraphs 35-40 and 69-85, and figures 3-5 | 1-18 |
| A | CN 110717937 A (SHENZHEN TUZHI INNOVATION TECHNOLOGY CO., LTD.) 21 January 2020 (2020-01-21) entire document | 1-18 |
| A | US 2014267611 A1 (MICROSOFT CORP.) 18 September 2014 (2014-09-18) entire document | 1-18 |
| A | WO 2020147796 A1 (BEIJING SENSETIME TECHNOLOGY DEVELOPMENT CO., LTD.) 23 July 2020 (2020-07-23) entire document | 1-18 |
| A | CN 111243106 A (HANGZHOU WEIER NETWORK SCIENCE AND TECHNOLOGY CO., LTD.) 05 June 2020 (2020-06-05) entire document | 1-18 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 May 2022** | **08 June 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/083227**

| Patent document cited in search report | | | Publication date (day/month/year) | Patent family member(s) | | | Publication date (day/month/year) |
|---|---|---|---|---|---|---|---|
| CN | 108305283 | A | 20 July 2018 | CN | 108305283 | B | 08 December 2020 |
| CN | 110717937 | A | 21 January 2020 | | None | | |
| US | 2014267611 | A1 | 18 September 2014 | EP | 2973219 | A1 | 20 January 2016 |
| | | | | WO | 2014160248 | A1 | 02 October 2014 |
| | | | | CN | 105229666 | A | 06 January 2016 |
| | | | | CN | 105229666 | B | 24 December 2019 |
| WO | 2020147796 | A1 | 23 July 2020 | JP | 2022501732 | A | 06 January 2022 |
| | | | | CN | 111460873 | A | 28 July 2020 |
| | | | | KR | 20210011424 | A | 01 February 2021 |
| | | | | US | 2021074005 | A1 | 11 March 2021 |
| | | | | SG | 11202011599 | A1 | 30 December 2020 |
| | | | | IN | 202027050399 | A | 23 July 2021 |
| CN | 111243106 | A | 05 June 2020 | CN | 111243106 | B | 25 May 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110351266